(19) **Europäisches Patentamt**
**European Patent Office**
**Office européen des brevets**

(11) **EP 2 897 315 B1**

(12) **EUROPEAN PATENT SPECIFICATION**

(45) Date of publication and mention
of the grant of the patent:
**07.08.2019 Bulletin 2019/32**

(21) Application number: **13837729.6**

(22) Date of filing: **21.08.2013**

(51) Int Cl.:
**H04J 11/00** *(2006.01)*

(86) International application number:
**PCT/JP2013/072245**

(87) International publication number:
**WO 2014/041973 (20.03.2014 Gazette 2014/12)**

(54) **OFDM RECEPTION APPARATUS AND OFDM RECEPTION METHOD**

OFDM-EMPFANGSVORRICHTUNG UND OFDM-EMPFANGSVERFAHREN

APPAREIL DE RÉCEPTION OFDM ET PROCÉDÉ DE RÉCEPTION OFDM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2012 JP 2012199392**

(43) Date of publication of application:
**22.07.2015 Bulletin 2015/30**

(73) Proprietor: **Mitsubishi Electric Corporation
Tokyo 100-8310 (JP)**

(72) Inventors:
• **SUGANO Miki
Tokyo 100-8310 (JP)**
• **SUZUKI Hiroshi
Tokyo 100-8310 (JP)**
• **NAITO Masahiro
Tokyo 100-8310 (JP)**

(74) Representative: **Hoffmann Eitle
Patent- und Rechtsanwälte PartmbB
Arabellastraße 30
81925 München (DE)**

(56) References cited:
**EP-A1- 1 492 258          WO-A1-03/084108
WO-A2-2008/018761     JP-A- 2005 184 435
JP-A- 2009 253 754      US-A1- 2003 236 071**

**Description**

**TECHNICAL FIELD**

The present invention relates to an OFDM reception apparatus and an OFDM reception method for receiving a signal transmitted by the orthogonal frequency division multiplexing (OFDM) scheme and, more particularly, to techniques for measuring quality of a received signal.

**BACKGROUND ART**

The OFDM (orthogonal frequency division multiplexing) scheme is widely used in terrestrial digital television broadcasting and wireless LAN (Local Area Network) systems as a multicarrier modulation scheme capable of realizing efficient data transmission. An OFDM signal is a signal generated by multivalued modulation of each of orthogonal carriers by a modulation scheme such as QAM (Quadrature Amplitude Modulation). Plural bits of data can be transmitted simultaneously on a plurality of carriers in an OFDM signal, so the transmission rate can be raised by a comparatively narrow occupied bandwidth.

In actual transmission, the received signal may include errors due to channel distortion or extraneous noise. To enable the original transmitted data to be recovered correctly even when the received signal includes errors, the gain of each carrier is controlled at the transmitting apparatus, and control is also carried out at the reception apparatus, such as control of the modulation scheme of each carrier or control of use of an error correction code. However, when a modulation scheme with small QAM values is selected, the number of data bits that can be transmitted is reduced, and when an error correction code is used, redundant data need to be added, and therefore the transmission rate is reduced.

As a remedy to this, in order to make data transmission relatively immune to the effects of transmission errors while maintaining the necessary transmission rate on each carrier, an apparatus has been proposed that estimates the transmission rate by measuring the noise level on each carrier and estimating the BER (Bit Error Rate), and determines the modulation scheme or error correction coding rate for each carrier so that the estimated BER for each carrier will be less than a desired standard BER (see, for example, JP 4816547 A (Fig.1)).

The apparatus described in patent reference 1 sorts the carriers according to the BER estimated for each carrier and compares the average value of the BER in groups of carriers collected in ascending order of their BER values with a BER threshold value required in the data prior to error correction. The apparatus described in patent reference 1 then estimates good reception conditions in sequence from the groups that do not exceed the BER threshold value, assigns high QAM values and high code rates to groups estimated to have good reception conditions, and controls the BER threshold value according to the actual BER detected by a bit error rate detection unit.

EP 1 492 258 A1 discloses a data retransmission method, providing a practical ARQ (Automatic Repeat request) scheme in multicarrier communication such as OFDM. All the carriers (i.e. subcarriers) are divided into a number of groups in advance, and these groups serve as the unit of data retransmission. An error detection code is attached on a per transmission symbol basis and transmission is performed, and, when a mobile terminal apparatus at the receiving end detects an error, a subcarrier information obtainer counts the number of carriers having received level below predetermined standard on a per group basis, and makes the group having the count value above a threshold level subject to retransmission request.

**SUMMARY OF THE INVENTION**

**PROBLEMS TO BE SOLVED BY THE INVENTION**

In the apparatus described in JP 4816547 A, however, the BER of each carrier must be estimated separately from the detection of the actual BER in the bit error rate detection unit. In addition, the apparatus described in JP 4816547 A is configured to apply the actually detected BER only to the setting of the bit error threshold value, and cannot directly identify the carriers in which the errors are actually occurring.

An object of the present invention is therefore to provide an OFDM reception apparatus and an OFDM reception method that can ascertain the reception level and the actual error occurrence situation for each carrier group.

**MEANS FOR SOLVING THE PROBLEM**

An OFDM reception apparatus according to an aspect of the present invention is defined by appended claim 1.

An OFDM reception method according to another aspect of the invention is defined by appended claim 9.

Any other reference to embodiments not falling within the scope of the claimed subject-matter are to be interpreted as examples for understanding the invention.

**EFFECTS OF THE INVENTION**

The present invention enables the reception level and the actual error occurrence situation to be ascertained for each carrier group.

**BRIEF DESCRIPTION OF THE DRAWINGS**

FIG. 1 is a block diagram schematically showing the configuration of an OFDM reception apparatus according to a first embodiment of the present invention (that is, an apparatus capable of carrying out an OFDM reception method according to the first embodiment).

FIG. 2 is a flowchart schematically showing the main steps in the OFDM reception method according to the first embodiment.

FIG. 3 shows an example of the payload configuration of the OFDM modulated signal in the first embodiment.

FIG. 4 shows exemplary modulation scheme settings included in the decoding information table in the first embodiment.

FIG. 5 is a timing diagram showing an example of the operation of the grouping unit in the first embodiment.

FIG. 6 shows exemplary results of grouping decisions made by the grouping unit in the first embodiment.

FIG. 7 is a timing diagram showing an example of the operation of the error information measurement unit of data in the
first embodiment.

FIG. 8 shows an example of the structure of the data stored in the memory in the first embodiment.

FIG. 9 is a block diagram schematically showing the configuration of an OFDM reception apparatus according to a second embodiment of the present invention (that is, an apparatus capable of carrying out an OFDM reception method according to the second embodiment).

FIG. 10 is a flowchart schematically showing the main steps in the OFDM reception method according to the second embodiment.

FIG. 11 shows exemplary modulation scheme settings included in the decoding information table in the second embodiment.

FIG. 12 is a timing diagram showing an example of the operation of the range determination unit in the second embodiment.

FIG. 13 shows exemplary results of grouping decisions made by the grouping unit in the second embodiment.

FIG. 14 shows an example of the structure of the data stored in the memory in the second embodiment.

FIG. 15 shows an example of the operation of the carrier analysis unit in the second embodiment.

FIGs. 16(a) and 16(b) show exemplary results of grouping decisions made by the grouping unit in the second embodiment.

FIG. 17 is a block diagram schematically showing the configuration of an OFDM reception apparatus according to a third embodiment of the present invention (that is, an apparatus capable of carrying out an OFDM reception method according to the third embodiment).

FIG. 18 is a flowchart schematically showing the main steps in the OFDM reception method according to the third embodiment.

FIGs. 19(a) to 19(d) illustrate an exemplary frequency interleaving method in the third embodiment.

FIG. 20 shows an example of the operation of the group number conversion unit in the third embodiment.

FIG. 21 is a block diagram schematically showing the configuration of an OFDM reception apparatus according to a fourth embodiment of the present invention (that is, an apparatus capable of carrying out an OFDM reception method according to the fourth embodiment).

FIG. 22 is a flowchart schematically showing the main steps in the OFDM reception method according to the fourth embodiment.

FIG. 23 is a block diagram schematically showing an example of the configuration of the data processing unit and status register in the OFDM reception apparatus according to the fourth embodiment.

## MODE FOR CARRYING OUT THE INVENTION

(1) First Embodiment

(1-1) Main Structure of the OFDM Reception Apparatus 100

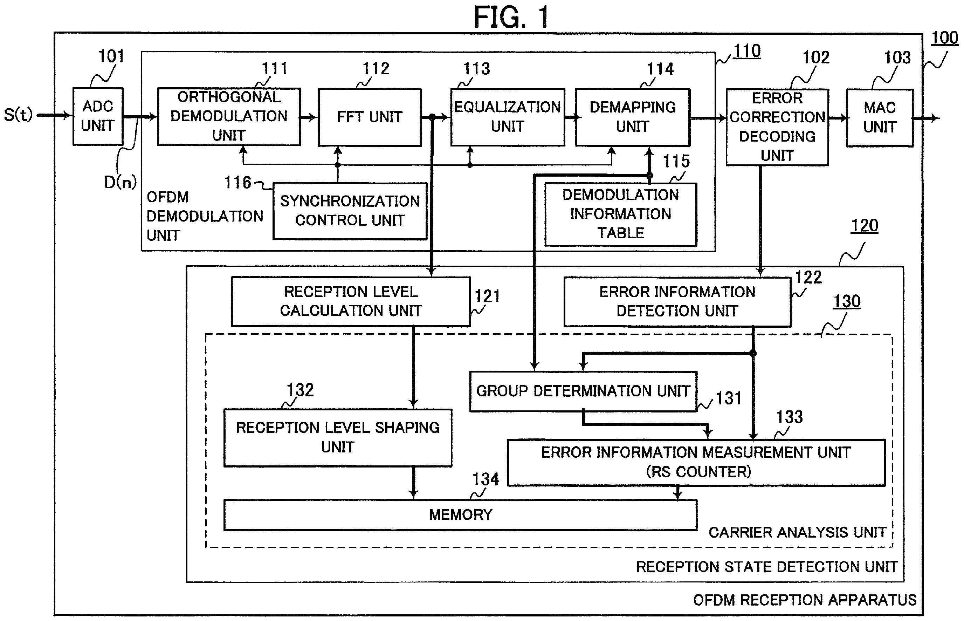

FIG. 1 is a block diagram schematically showing the configuration of an OFDM reception apparatus 100 according to a first embodiment of the present invention (that is, an apparatus capable of carrying out an OFDM reception method according to the first embodiment). As shown in FIG. 1, the OFDM receiving apparatus 100 according to the first embodiment includes, as principal components, an ADC (Analog-to-Digital Converter) unit 101, an error correction decoding unit 102 as an exemplary error correction decoding means, a MAC (Media Access Control) unit 103, an OFDM demodulation unit 110 as an exemplary OFDM demodulation means, and a reception state detection unit 120.

Further, as shown in FIG. 1, the OFDM demodulation unit 110 includes, as principal components, an orthogonal demodulation unit 111, an FFT (Fast Fourier Transform) unit 112, an equalization unit 113, a demapping unit 114, a demodulation information table 115, and a synchronization control unit 116.

Furthermore, as shown in FIG. 1, the reception state detection unit 120 includes, as principal components, a reception level calculation unit 121 as an exemplary carrier reception state calculation means, an error information detection unit 122 as an exemplary error information detection means, and a carrier analysis unit 130. The carrier analysis unit 130 includes a group determination unit 131 as an exemplary grouping means, a reception level shaping unit 132 as an exemplary carrier group representative value calculation means, and a memory 134 as an exemplary storage means.

In the OFDM receiving apparatus 100 according to the first embodiment, the OFDM demodulation unit 110 demodulates a received OFDM modulated signal and generates a transmitted signal bit series based on the OFDM modulated signal. The error correction decoding unit 102 generates a data series in error correction processing units by performing error correction decoding of the transmitted signal bit series generated by the OFDM demodulation unit 110. The reception level calculation unit 121 calculates parameter values on a carrier-by-carrier basis from the OFDM modulated signal as indices of reception state quality. The error information detection unit 122 detects the state of transmission error detection and correction in the error correction decoding unit 102. The group determination unit 131 discriminates a plurality of carrier groups comprising series of a first prescribed number of consecutive carriers or data series of a prescribed second number of error correction processing units. The error information measurement unit 133 measures the output from the error information detection unit 122 in units of the carrier groups, for each of the plurality of carrier groups determined by the group determination unit 131. The reception level shaping unit 132 calculates a representative value for each of the carrier groups according to the parameter values output from the reception level calculation unit 121. The representative values output from the reception level shaping unit 132 and the results of said measuring output from the error information measurement unit 133 are sequentially written, for each of the carrier groups corresponding to the representative values and the results of said measuring, in the memory 134, which holds the written data. With the OFDM receiving apparatus 100 according to the first embodiment, the reception level and the state of error occurrence can be ascertained in correspondence to each carrier group by checking the content of the memory 134.

(1-2) Main Steps in the OFDM Reception Method

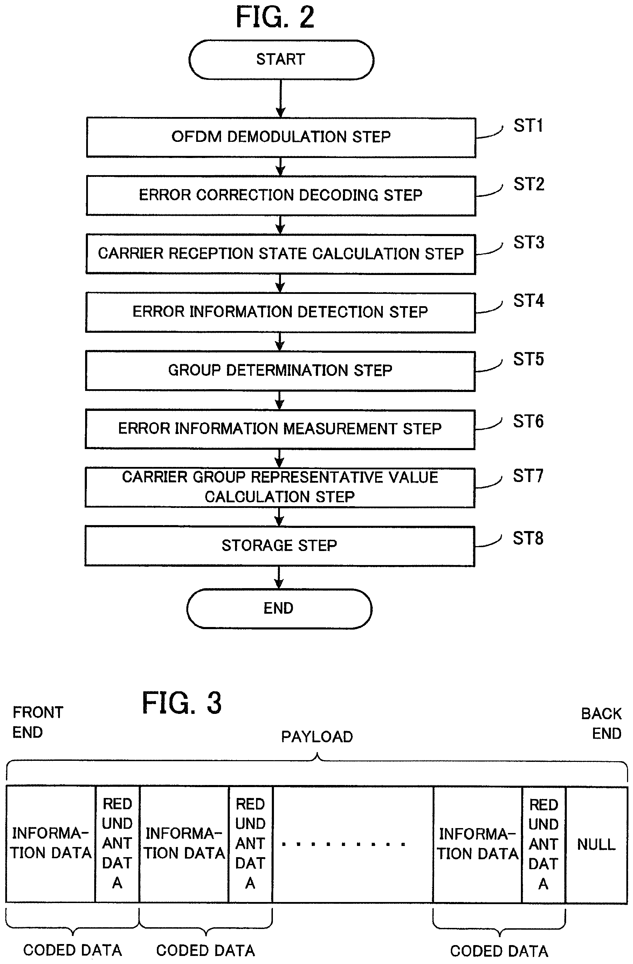

FIG. 2 is a flowchart schematically showing the main steps in the OFDM reception method according to the first embodiment. As shown in FIG. 2, the OFDM reception method according to the first embodiment includes an OFDM demodulation step (step ST1) for demodulating a received OFDM modulated signal and generating a transmitted signal bit series based on the OFDM modulated signal, an error correction decoding step (step ST2) for generating a data series in error correction processing units by performing error correction decoding of the transmitted signal bit series generated in the OFDM demodulation step, a carrier reception state calculation step (step ST3) for calculating parameter values on a carrier-by-carrier basis from the OFDM modulated signal as indices of reception state quality, and an error information detection step (step ST4) for detecting the state of transmission error detection and correction in the error correction decoding step. The OFDM reception method according to the first embodiment also includes a grouping step (step ST5) for discriminating a plurality of carrier groups comprising series of a first prescribed number of consecutive carriers or data series of a second prescribed number of error correction processing units, an error information measurement step (step ST6) for measuring the output from the error information detection step in units of the carrier groups, for each of the plurality of carrier groups determined in the grouping step, a carrier group representative value calculation step (step ST7) for calculating a representative value for each of the carrier groups according to the parameter values output in the carrier reception state calculation step, and a storage step (step ST8) in which the representative values output in the carrier group representative value calculation step and the results of said measuring output in the error information measurement step are sequentially written in the memory 134, which functions as a storage means, for each of the carrier groups corresponding to the representative values and results of said measuring, and the memory 134 holds the written data. With the OFDM reception method according to the first embodiment, the reception level and the state of error occurrence can be ascertained in correspondence to each carrier group by checking the content of the memory 134.

(1-3) Detailed Description of the OFDM Reception Apparatus 100 and the OFDM Reception Method

In the first embodiment, the OFDM receiving apparatus 100 operates as part of a system that transmits a frame consisting of idle time, a preamble, and a payload from an OFDM transmission apparatus to the OFDM receiving apparatus 100. A frame comprises multiple symbols. The OFDM transmission apparatus performs a process that assembles the user data to be transmitted into the payload and adds payload-related information to the payload as frame header information, and a process that assembles the user data to be transmitted into the payload and inserts null packets into the payload so that the length of the payload matches a prescribed payload length. Further, the OFDM transmission apparatus adds parity bits to the frame header to enable the OFDM receiving apparatus 100 to perform error detection on the frame header, and scrambles the entire payload before performing OFDM modulation of the frame and transmitting it as an OFDM modulated signal $S(t)$. In the first embodiment, the OFDM transmission apparatus has the ability to designate the modulation scheme on a carrier-by-carrier basis, and the OFDM receiving apparatus 100 has the ability to designate the demodulation scheme on a carrier-by-carrier basis. These abilities can be realized by, for example, providing the OFDM transmission apparatus and the OFDM receiving apparatus 100 with information tables having common contents (a modulation information table and a demodulation information table).

The OFDM modulated signal S(*t*) received by the OFDM receiving apparatus 100 is input to the ADC unit 101, which converts the signal from an analog signal to a digital signal series D(*n*). The digital signal series D(*n*) resulting from the conversion is input to the OFDM demodulation unit 110.

The OFDM demodulation unit 110 demodulates the digital signal series D(*n*), which is based on the received OFDM modulated signal, and outputs bit series data based on the OFDM modulated signal.

The orthogonal demodulation unit 111 in the OFDM demodulation unit 110 converts an IF (Intermediate Frequency) signal to baseband signals I(*n*) and Q(*n*), which are then input to the FFT unit 112. The baseband signal I(*n*) is an I (In-phase) signal and the baseband signal Q(*n*) is a Q (Quadrature-phase) signal. The baseband signals I(*n*) and Q(*n*) are converted in the FFT unit 112 from time-domain signals to frequency-domain signals by a fast Fourier transform and input to the equalization unit 113. The baseband signals, now in the form of frequency-domain signals, are corrected for channel distortion in the equalization unit 113 and then input to the demapping unit 114.

The demapping unit 114 performs a demapping process to generate bit series data from the output of the equalization unit 113 using modulation scheme information for each carrier stored in the demodulation information table 115. The modulation scheme information is information either indicating the assigned carrier modulation scheme, such as QPSK (Quadrature Phase Shift Keying), 16-QAM, or 64-QAM, or indicating a carrier mask designation, which means that the corresponding carrier is not used. This information must agree with the modulation scheme set for each carrier in the OFDM transmission apparatus. In the first embodiment, the modulation scheme information is prestored in the demodulation information table 115, and the demapping unit 114 performs demapping with reference to the modulation scheme information in the demodulation information table 115 and outputs the payload data as bit series data.

The synchronization control unit 116 performs synchronization processing, such as symbol timing synchronization, carrier frequency synchronization, and sampling frequency synchronization, so that the demodulation process is carried out correctly by the OFDM demodulation unit 110. The synchronization control unit 116 is configured to perform processes, such as channel estimation and delay profile detection, for correcting channel distortion and achieving precise synchronization.

The bit series data output from the OFDM demodulation unit 110 are input to the error correction decoding unit 102. The error correction decoding unit 102 performs an error correction decoding process on the bit series data to generate received data. The error correction decoding process is implemented by a decoding scheme corresponding to the error correcting coding scheme employed at the OFDM transmission apparatus.

The first embodiment illustrates a case in which a Reed-Solomon (RS) code is used as the error correction scheme and a continuous eight-bit (one-byte) block of data is defined as the error correction processing unit (RS unit).

With an RS code, redundant data used for error correction are added to the information data to be actually transmitted. The quantity of such redundant data is determined according to the error correction ability. If the quantity of information data is represented by *k* (*k* is a natural number), the quantity of coded data, which is the sum of the quantity of information data and the quantity of redundant data, is represented as *n* (*n* is a natural number), and the number of correctable RS units is represented as *t* (*t* is a natural number), the following equation holds:

$$t = (n - k)/2.$$

Accordingly, the quantity of redundant data (*n* - *k*) is four when *t* = 2 and eight when *t* = 4. Here, one datum, used as the basic unit for counting data, is equivalent to one RS unit (8 bits).

Thus, while the data input to the error correction decoding unit 102 also include redundant data, the data output from the error correction decoding unit 102 include only information data. This means that a smaller quantity of data is output from the error correction decoding unit 102 than is input to the error correction decoding unit 102, the difference being the quantity of redundant data. The error correction decoding unit 102 in the first embodiment processes payload data structured, for example, as shown in FIG. 3. In other words, coded data are sequentially input to the error correction decoding unit 102, and of the coded data, information data are input first, then redundant data. After a processing delay in the error correction decoding unit 102, valid data corresponding to the quantity of information data is output from the error correction decoding unit 102.

The received data obtained by the error correction decoding unit 102 are input to the MAC unit 103. The MAC unit 103 carries out, on the received frame data, a descrambling process to remove the scrambling applied in the OFDM transmission apparatus, a frame header analysis process to take the frame headers from the data series and extract the information related to the payload, and a user data separation process to separate the individual user data from the payload in accordance with the information obtained in the frame header analysis process. The data output from the MAC unit 103 are output to a downstream processing unit (e.g., a block which performs processing on command from the user).

The reception state detection unit 120 will be described next. The reception level calculation unit 121 in the reception state detection unit 120 calculates the reception power level for each carrier by using the complex-valued data output from the FFT unit 112 during OFDM demodulation in the OFDM demodulation unit 110. In the first embodiment, the reception level calculation unit 121 calculates the reception level for each carrier. The reception level calculation unit 121 may, however, calculate a value indicative of the reception state of each carrier instead of the reception level. Exemplary values indicating the reception state include SNR (Signal-to-Noise Ratio) and CNR (Carrier-to-Noise Ratio) values.

The error information detection unit 122 in the reception state detection unit 120 detects the operational status of the error correction decoding in the error correction decoding unit 102. The error information detection unit 122 detects the presence or absence of RS units of data including errors, the success or failure of error correction, or the starting positions of RS decoding processing units, and generates signals indicating the detection results in synchronization with the decoding process performed by the error correction decoding unit 102. The error information detection unit 122 generates signals such as an RS data enable signal, an RS redundant data enable signal, and an RS error detection position signal.

Next the carrier analysis unit 130 will be described. The carrier analysis unit 130 analyzes and stores the reception state of each carrier.

The OFDM modulated signal in the first embodiment permits designation of the modulation scheme on a carrier-by-carrier basis, as already mentioned; the number of bits that can be transmitted by one carrier is two, four, or six bits with QPSK, 16-QAM, and 64-QAM, respectively. The bit length per carrier after OFDM demodulation does not always coincide with the RS units used in the error correction decoding unit 102, so it is not possible to directly determine which of the carriers demodulated by the OFDM demodulation unit 110 is responsible for a demodulation error from the error information detected by the error information detection unit 122. Additionally, when a demodulation error occurs due to channel distortion or extraneous noise on the channel, it is rarely the case that only a single carrier is affected; in most cases neighboring carriers are also affected.

For these reasons, the carrier analysis unit 130 is configured to be able to ascertain the reception level or error correction decoding state, and the frame error occurrence situation, for carrier groups (also referred to just as 'groups') consisting of multiple carriers.

The operation of the carrier analysis unit 130 will be described below. The description of the first embodiment assumes that there are 80 carriers per symbol (carrier numbers 0, 1, ..., 79 are assigned to the carriers in ascending order of frequency) and that QPSK, 16-QAM, 64-QAM, and carrier mask can be specified as carrier modulation schemes.

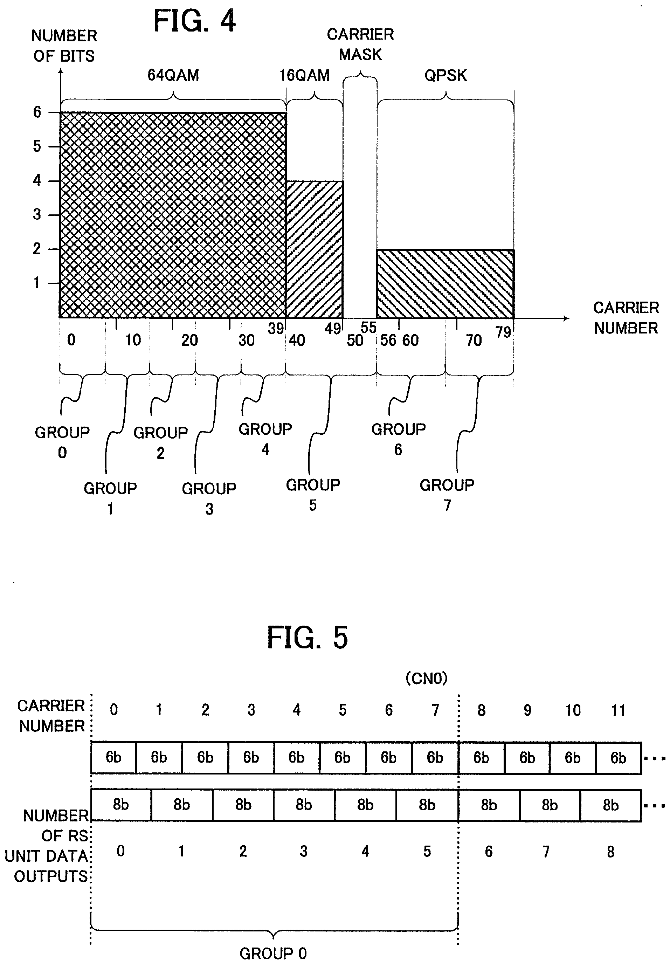

The group determination unit 131 divides the carriers into groups at prescribed carriers and determines the numbers of RS units, or bytes in the first embodiment, at which the group boundaries occur. As exemplary settings in the demodulation information table 115, FIG. 4 shows that 64-QAM is specified for carrier numbers 0 to 39, 16-QAM is specified for carrier numbers 40 to 49, carrier mask is specified for carrier numbers 50 to 55, and QPSK is specified for carrier numbers 56 to 79. In the illustrated example, the group determination unit 131 groups the carriers into eight groups and sets the group end carrier numbers CN$n$ ($n$ is an integer from 0 to 7) as CN0 = 7, CN1 = 15, CN2 = 23, CN3 = 31, CN4 = 40, CN5 = 55, CN6 = 67, and CN7 = 79, where n denotes the group number, making the total number of bits transmitted in each group divisible by the RS unit. In this case, 328 bits can be transmitted per symbol.

In the OFDM demodulation unit 110, OFDM demodulation is performed sequentially on the OFDM modulated signal in the order of carrier numbers 0, 1, 2, ..., 79. Here, the group determination unit 131 concurrently references the data in the demodulation information table 115 which are referenced by the demapping unit 114 in order of carrier number.

The operation for determining group boundaries in terms of the RS units according to the group end carrier numbers will be described using FIG. 5. Focusing on the carriers at the ends of the groups, it can be seen that 48 bits, or six bytes, are transmitted on the eight carriers up to carrier number 7, the last carrier of group 0, and this corresponds to RS unit number 5 in the error correction decoding unit 102. Accordingly, "5" is assigned as boundary information G0b for group 0.

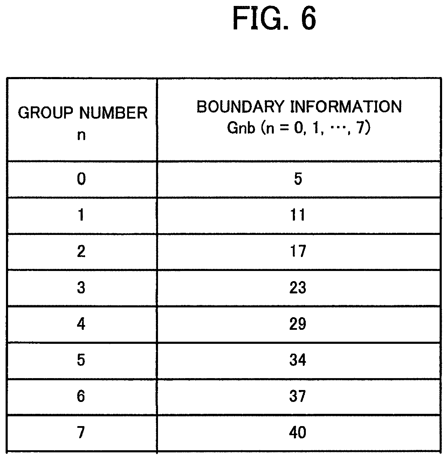

Next, for group 1, it can be seen that 96 bits or 12 bytes, including those of group 0, are transmitted up to carrier number 15, and this precisely coincides with RS unit number 11. The group determination unit 131 accordingly assigns "11" as the boundary information G1b for group 1. Similar group boundary determinations are performed for groups 2 to 7, resulting in the boundary information G0b to G7b for the respective groups shown in FIG. 6. The group determination unit 131 holds the group boundary information thus determined and also outputs it to the error information measurement unit 133.

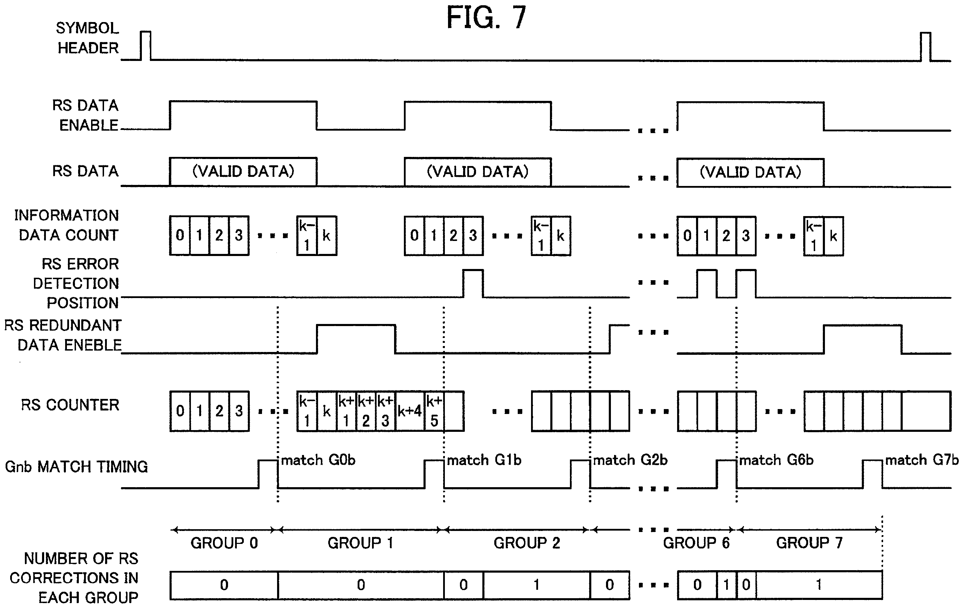

Using the group boundary information from the group determination unit 131, the error information measurement unit 133 measures the frequency of error information occurrence in each group. This operation will be described using the example in FIG. 7. In FIG. 7, the symbol header signal indicates the start of a symbol period, the RS data signal indicates the RS decoded data output in RS units, i.e., in blocks of eight bits per cycle, after the RS decoding process in the error correction decoding unit 102, and the RS data enable signal indicates whether the RS data are valid or not ("1" being valid) in RS units; these signals are output from the error correction decoding unit 102. The information data count 1, ..., $k$ represents the counted quantity of information data output from the error correction decoding unit 102 after RS decoding, and is reset to "0" at each round of the RS decoding process. The RS error detection position signal indicates positions at which errors were detected in RS decoding, referenced to the RS data enable signal ("1" representing the presence of an error).

The RS redundant data enable signal in FIG. 7 represents the redundant data portions of the coded data. Since the redundant data are not needed after error correction decoding, they are not output from the error correction decoding unit 102 to the MAC unit 103. However, as redundant data are included as transmitted data in the OFDM modulated signal and occupy a corresponding number of carriers, periods corresponding to the transmission of redundant data are indicated ("1" representing a redundant data transmission period). Input and output to and from the error correction decoding unit 102 both take place in RS units, and coded data in which information data are placed first, followed by the corresponding redundant data, are sequentially input to the error correction decoding unit 102 as illustrated in FIG. 3. Accordingly, the invalid periods of the RS data enable signal are equal to or longer than the periods during which the RS redundant data enable signal is "1".

The RS counter is incremented by one whenever the RS data enable is "1" or the RS redundant data enable is "1"; its value represents a count of the number of RS units of information data output from the error correction decoding unit 102 and of the redundant data that should have been received. The RS counter is reset to "0" at the start of a symbol. Since the RS counter indicates the quantity of data received per symbol, when the value of the RS counter matches the group boundary information $Gnb$ ($n$ being an integer from 0 to 7) determined previously (when the group boundary information $Gnb$ match timing signal in FIG. 7 is "1"), it represents the position of the last carrier of the carrier group corresponding to the boundary information $Gnb$ for the group for which the current data are being compared. It is therefore possible to allocate eight periods to the groups such that the period from the start of a symbol to the time when the group boundary information $Gnb$ match timing signal becomes "1" for the first time corresponds to group 0, the following period up to when the signal becomes "1" for the second time corresponds to group 1, and so on down to group 7.

The error information measurement unit 133 also measures the RS error correction detection position signal in accordance with the grouping made based on the timing of matches with the group boundary information $Gnb$, and calculates the number of RS corrections in each group.

The reception level shaping unit 132 shapes the reception level value for each group in accordance with the group end carrier number $CNn$ used in the group determination unit 131, and calculates a representative value of the reception level. A general statistic indicating the reception level of the group, such as the mean, median, or mode of the reception levels within the group, may be used as the representative value of the reception level.

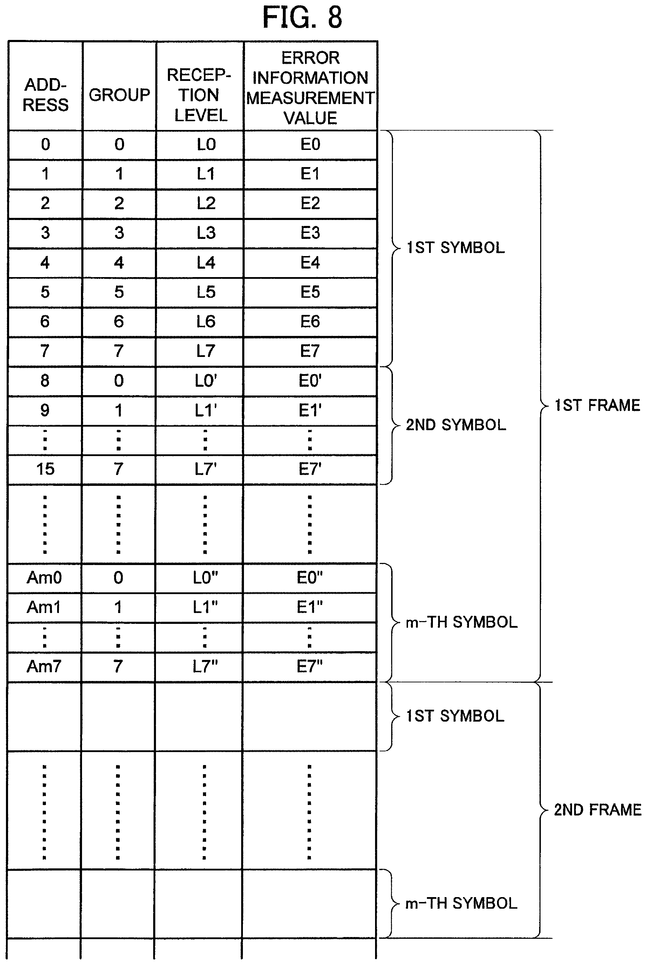

The memory 134 holds the values determined by the reception level shaping unit 132 and the error information measurement unit 133 for a certain period of time. FIG. 8 shows an example of the state of data storage in the memory 134. In FIG. 8, the address column indicates addresses in the memory, the group column indicates the group numbers determined by the group determination unit 131, the reception level column indicates the representative reception level values of the groups determined by the reception level shaping unit 132, and the measured error information value column indicates error correction information such as the number of error corrections measured by the error information measurement unit 133 for each group.

L0, ..., L7, L0', ..., L7', and L0", ..., L7" represent reception level values. E0, ..., E7, E0', ..., E7', and E0", ..., E7" represent measured values of error information. $Am0$, ..., $Am7$ represent the values of the addresses at which values for the $m$th symbol are written in the memory 134. FIG. 8 illustrates a case in which one frame consists of $m$ symbols ($m$ being a natural number). Information for one group corresponds to one address, and the results of said measuring are written sequentially for each OFDM symbol received. The number of frames that can be held in the memory 134 depends on the capacity reserved for the memory 134.

Even for the same group in the same symbol, the reception level shaping unit 132 and the error information measurement unit 133 finish processing at different timings, so the timings at which they write into the memory 134 do not coincide. Since the measurement values are written in the memory 134 at identical addresses in a configuration that enables them to be retrieved via a device external to the OFDM receiving apparatus 100 (e.g., a CPU), however, by reading the values held in the memory 134 at appropriate timings, information that directly associates the carrier groups with their reception levels and error occurrence statuses can be obtained.

Thus, by periodically (e.g., at predetermined intervals) reading the values in the memory 134, the actual BER value can be calculated for each carrier group.

Alternatively, by controlling the entire area of the memory 134 as a ring buffer and suspending writing to the memory 134 upon occurrence of a certain CPU interrupt, such as a data reception anomaly in the OFDM receiving apparatus 100, the reception state immediately before the occurrence of the interrupt can be ascertained by reading the values in the memory 134 after the interrupt.

While all of the group end carrier numbers $CNn$ prepared by the group determination unit 131 are used in the first embodiment described above, it is not strictly necessarily to perform grouping by using all of the values defined as group end carrier numbers $CNn$; it is also possible to operate with less than eight groups.

(1-4) Effects of the First Embodiment

As described above, the OFDM receiving apparatus 100 and the OFDM reception method according to the first embodiment enable the reception level and the error occurrence situation in RS decoding to be ascertained in correspondence to carrier groups.

In addition, the OFDM receiving apparatus 100 and the OFDM reception method according to the first embodiment enable the modulation scheme to be changed or the transmission gain to be adjusted directly for carrier groups in which errors are occurring, allowing more finely tuned optimal carrier settings to be made.

Additionally, with the OFDM receiving apparatus 100 and the OFDM reception method according to the first embodiment, since the group determination unit 131 groups carriers while checking carrier numbers against the order in which data are output in RS units, with reference to the content of the demodulation information table 115, error information can be mapped to carrier groups even when the carriers do not all employ the same modulation schemes.

Furthermore, because group boundaries are set in terms of numbers of carriers, group boundaries can be determined when modulation scheme information is read from the demodulation information table 115 in synchronization with the demapping processing being performed in the demapping unit 114, and subsequent mapping between RS processing units and carrier groups can be performed using the results of error correction decoding from the error correction decoding unit 102, allowing processing to be completed within a symbol.

(1-5) Variations of the First Embodiment

Although carrier numbers representing carrier group boundaries are set as the basis for grouping in the first embodiment, RS processing units may be used as the basis and numbers of RS processing units may be set instead.

Also, although FIG. 1 shows the reception level shaping unit 132 and error information measurement unit 133 writing individually into the memory 134, a separate memory access arbitration unit may be provided for centralized control of the memory 134.

Although the group determination unit 131 was described as grouping carriers by concurrently making reference to data in the demodulation information table 115 which are being referenced by the demapping unit 114 according to carrier number, the group determination unit 131 may have a group determination completion flag Fg and the time periods in which the grouping operation is performed may be limited according to the status of that flag. It is also possible to limit the periods during which the circuitry operates by providing a group determination completion flag Fg ("0" meaning that group determination is completed and "1" meaning that the grouping operation is completed), setting Fg to "0" to start grouping only at the start of OFDM reception or when there has been a change in the content of the demodulation information table 115, and setting Fg to "1" after completion of the operation. By thus limiting the duration of the operation of the group determination unit 131, power consumption can be reduced.

(2) Second Embodiment

(2-1) Main Structure of the OFDM Reception Apparatus 200

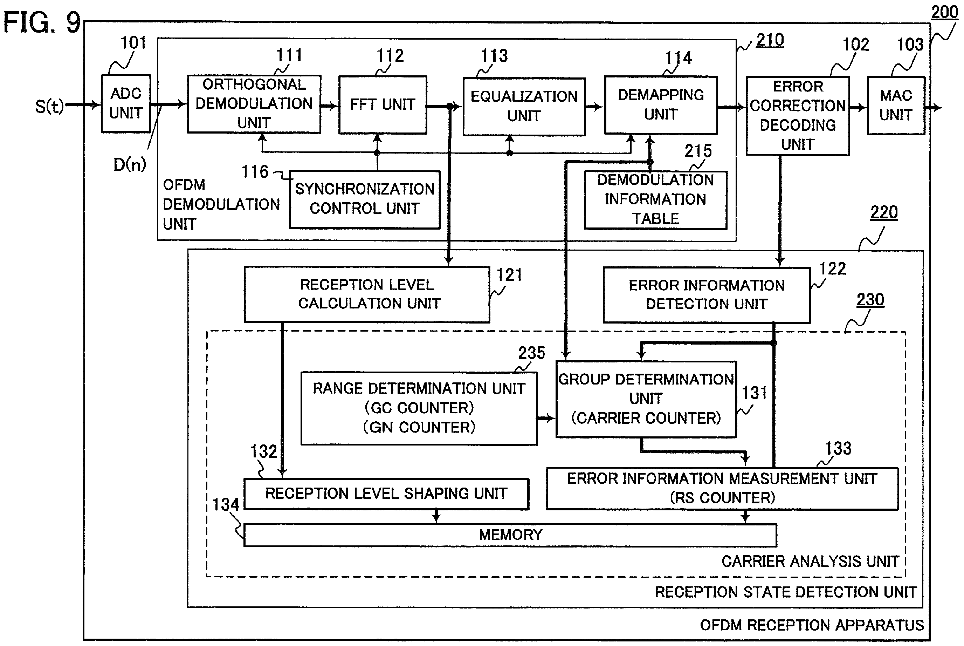

FIG. 9 is a block diagram schematically showing a configuration of an OFDM reception apparatus 200 according to a second embodiment of the invention (that is, an apparatus capable of carrying out an OFDM reception method according to the second embodiment). In FIG. 9, components identical to or corresponding to the components of the OFDM receiving apparatus 100 shown in FIG. 1 are denoted by the same reference characters. The OFDM receiving apparatus 200 in the second embodiment differs from the configuration of the OFDM receiving apparatus 100 in FIG. 1 according to the first embodiment in that a carrier analysis unit 230 in a reception state detection unit 220 includes a range determination unit 235. In FIG. 9, the content of an demodulation information table 215 in an OFDM demodulation unit 210 differs from the content of the demodulation information table 115 in the first embodiment shown in FIG. 2.

(2-2) Main Steps in the OFDM Reception Method

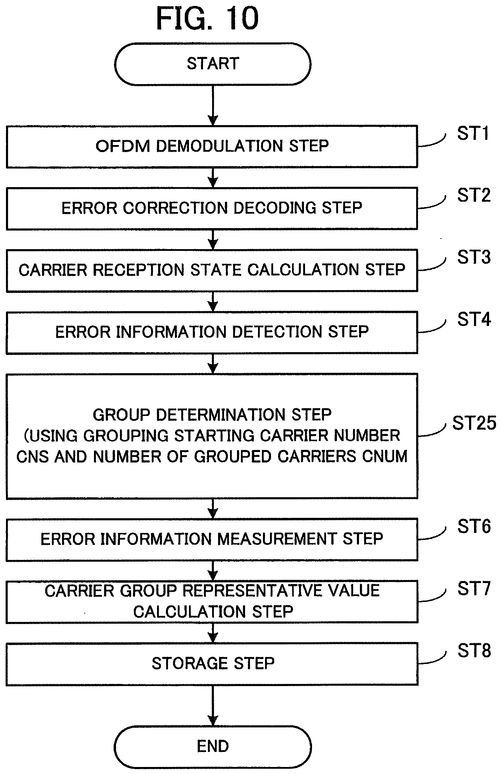

FIG. 10 is a flowchart schematically showing main steps in the OFDM reception method according to the second embodiment. In FIG. 10, steps identical to or corresponding to the steps shown in FIG. 2 are given the same step numbers. The OFDM reception method in the second embodiment differs from the OFDM reception method according to the first embodiment shown in FIG. 2 in that the grouping step (ST25) is carried out using a grouping starting carrier number CNS indicating the carrier number at which to start grouping and a number of grouped carriers CNUM representing the number of carriers included in a group, which are determined by the range determination unit 235. With the OFDM reception method according to the second embodiment, since the carrier range over which measurement is performed is set using the starting carrier number CNS and the number of grouped carriers CNUM, the required circuit size of the OFDM receiving apparatus 200 can be reduced and the processing for changing settings can be decreased.

(2-3) Detailed Description of the OFDM Reception Apparatus 200 and the OFDM Reception Method

Next the operation of the carrier analysis unit 230 in the OFDM receiving apparatus 200 will be described. In the first embodiment described above, the group determination unit 131 groups carriers in sequence from the first carrier number 0 on the basis of the group end carrier numbers CNn. For a more detailed determination of the number of error corrections, the number of carriers included in each group could be reduced to increase the number of groups. However, increasing the number of groups leads to an increase in the amount of data held in the memory 134 because as many group end carrier numbers CNn as the number of groups are necessary.

Therefore, in the second embodiment, the grouping starting carrier number CNS, indicating the carrier number from which to start grouping, and the number of grouped carriers CNUM, indicating the number of carriers included in each group, are set in the range determination unit 235.

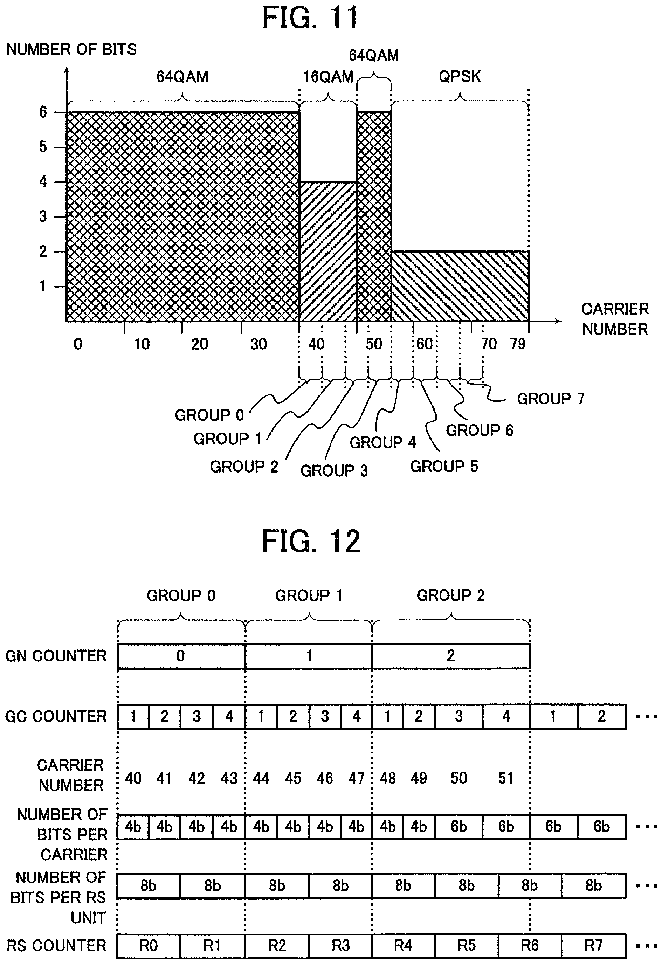

The operation of the range determination unit 235 will be described next. The second embodiment assumes that a symbol includes eighty carriers as in the first embodiment. In the second embodiment, however, the demodulation information table 215 is set so that 64-QAM is designated for carrier numbers 50, 51, ..., 55 instead of carrier mask as illustrated in FIG. 11; this is a difference from the first embodiment.

The range determination unit 235 calculates the group end carrier number of each group from the grouping starting carrier number CNS and the number of grouped carriers CNUM by using a GC counter to count the carrier numbers in the groups.

For instance, suppose that the starting carrier number CNS is "40" and the number of grouped carriers CNUM is "4". As shown in FIG. 12, the GC counter counts the number of carriers and is reset to "0" each time its count matches the number of grouped carriers CNUM. When a match occurs, group boundary information G$nb$, where $n$ is the value of a GN counter indicating the group number, is set to the value of an RS counter and the GN counter is incremented by one. The GN counter is reset to 0 at the start of a symbol and represents the group number.

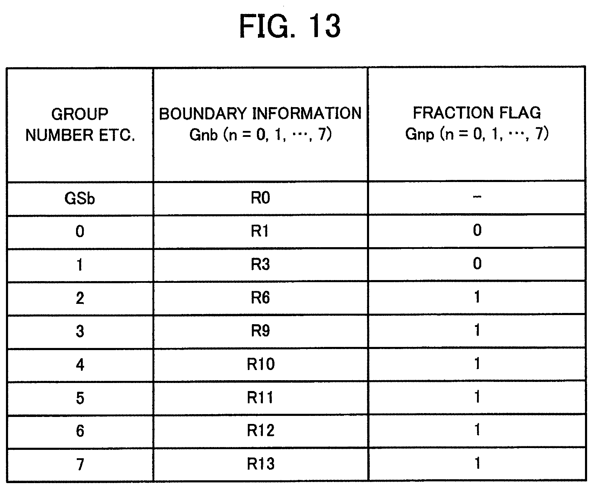

The RS counter value is reset to "0" at the start of a symbol, but when the starting carrier number CNS is not "0", the RS counter value does not become "0" at the start of group 0 unless carrier mask is set for all of the carriers from carrier number 0 to the starting carrier number CNS. It is therefore necessary to also store the RS counter value when the carrier number matches the starting carrier number CNS; this value is referred to as 'the RS counter value when the carrier number matches the starting carrier number CNS', or GSB. In FIG. 13, GSb = "R0", G0b = "R1", and G1b = "R3".

The carrier modulation scheme changes part way through group 2 and G2b is "R6"; however, the number of RS units included in group 2 is 2.5, producing a fractional value. The group determination unit 131 accordingly keeps fraction flags G$np$ ($n$ = 0, ..., 7), setting these flags to "1" when a fractional value is produced in assigning group boundary information G$nb$ and to "0" when no fractional value is produced. Thus, in FIG. 13, G0p = "0", G1p = "0", and G2p = "1".

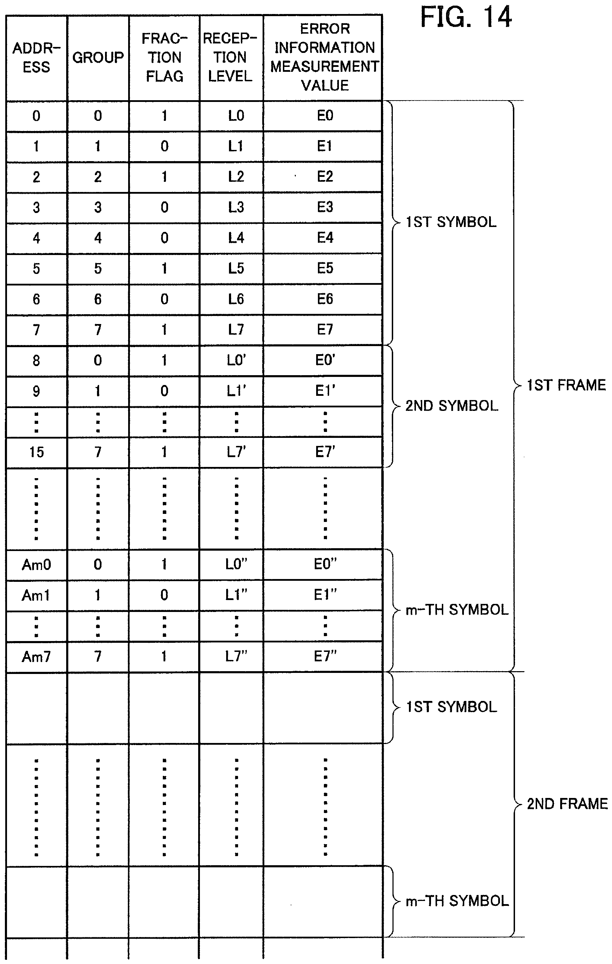

Similar processing is performed for the subsequent groups, producing the results shown in FIG. 13. Using the derived values of the fraction flags G$np$, the error information measurement unit 133 can determine the reception level or the number of error corrections in each group of carriers in the range from carrier number 40 to 71 as in the first embodiment, and the measured data are written in the memory 134 as shown in FIG. 14.

When there is a group for which the fraction flag G$np$ is "1" in the memory 134, the last carrier of that group may have an effect that spans across groups. For example, if carrier CB spans across from group GA into group GB and many transmission errors occur in group GA, transmission errors can be reduced by a remedy such as changing the modulation scheme for the carriers included in group GA; the same remedy as for the carriers of group GA can be proactively applied to the spanning carrier CB.

When the number of data bits transmitted in an entire symbol is not divisible by the RS unit, that is, when the fraction flag becomes "1" at the last group, at the start of a symbol, the initial value from which to calculate the number of transmitted bits in the group determination unit 131 may be set to the number of fraction bits calculated in the previous symbol, instead of "0", although it is always reset to "0" at the first symbol in a frame.

In the first embodiment, the carrier number at which to start grouping was fixed at 0; suppose that, as in the second embodiment, the first carrier number of group 0 is set as the carrier number at which grouping is started and a value equivalent to GSB, the 'RS counter value when the carrier number matches the starting carrier number CNS,' is maintained. Given that there are eighty carriers per symbol, the 'RS counter value when the carrier number matches the starting carrier number CNS' or GSB has 7 bits, and there are eight group end carrier numbers CN$n$ ($n$ is an integer from 0 to 7), which require 56 bits, so a total of 63 bits are necessary.

In the second embodiment, in contrast, processing equivalent to the first embodiment can be performed by use of the starting carrier number CNS and the number of grouped carriers CNUM in place of the group end carrier numbers CN$n$, with an additional 7-bit carrier counter in the reception level shaping unit 132.

The carrier counter in the group determination unit 131 for counting carriers up to the starting carrier number CNS has 7 bits, the 'RS counter value when the carrier number matches the starting carrier number CNS' or GSB has 7 bits, the GC counter has 7 bits, the GN counter has 3 bits, the fraction flag has 8 bits, and the reception level shaping unit 132 has 7 bits.

The required number of bits is the sum of these bit counts, or 39 bits. The second embodiment thus permits a reduction in circuit size as compared with the first embodiment.

Assuming eight hundred carriers per symbol, the required number of bits would be 90 bits in the first embodiment and 51 bits in the second embodiment; as the number of carriers per symbol increases, the difference in circuit size also increases.

When the setting of the number of carriers per group is altered, the number of parameters to be changed in the first embodiment is eight: the 'RS counter value when the carrier number matches the starting carrier number CNS' or GSB, plus the group end carrier numbers CN*n*. In the second embodiment there are only two parameters to be changed: the starting carrier number CNS and the number of grouped carriers CNUM.

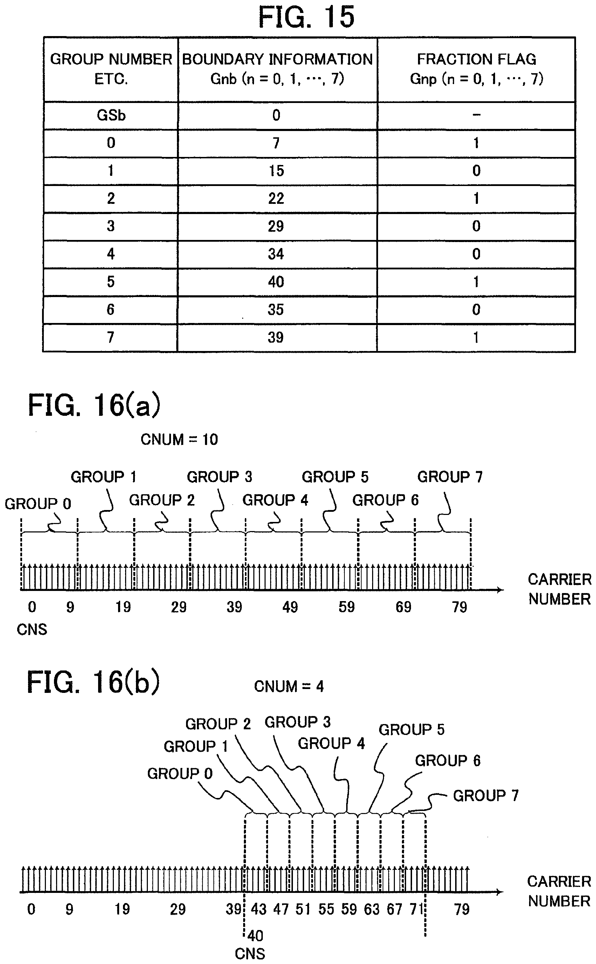

When the starting carrier number CNS is set to "0" and the number of grouped carriers CNUM to "10", carriers are grouped as shown in FIG. 15, allowing the reception level or the number of error corrections to be obtained on a carrier group basis for all the carriers in the symbol as in the first embodiment. Thus, by adopting a configuration in which the starting carrier number CNS and the number of grouped carriers CNUM can be changed by an external device connected to the OFDM receiving apparatus 200 (e.g., an external CPU), the reception level or error occurrence situation can first be ascertained on a carrier group basis for all the carriers in the symbol as shown in FIG. 16(a) and then, with only a small amount of setting alteration processing, detailed states can be checked for a limited carrier range as shown in FIG. 16(b).

(2-4) Effects of the Second Embodiment

As described above, with the OFDM receiving apparatus 200 and the OFDM reception method according to the second embodiment, since the carrier range under measurement is set using the starting carrier number CNS and the number of grouped carriers CNUM, the circuit size can be reduced and the amount of setting alteration processing can be reduced.

Furthermore, with the OFDM receiving apparatus 200 and the OFDM reception method according to the second embodiment, since the fraction flags Gnp are used when grouping is performed by the group determination unit 131, when the number of bits transmittable on the carriers included in a group is not divisible by the RS unit, processing that takes into consideration whether the neighboring group is affected or not can be performed.

(3) Third Embodiment

(3-1) Main Structure of the OFDM Reception Apparatus 300

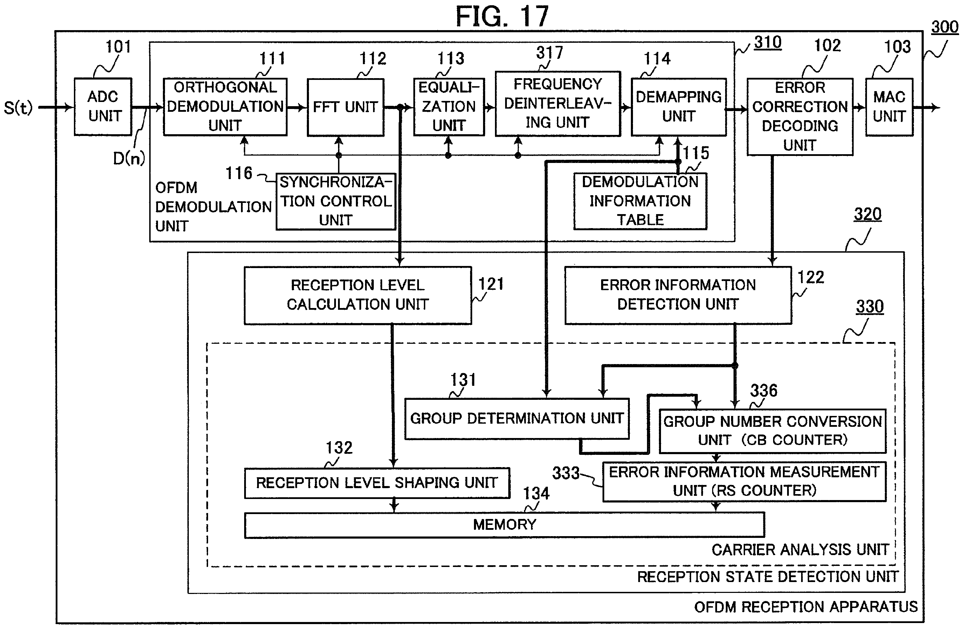

FIG. 17 is a block diagram schematically showing a configuration of an OFDM reception apparatus 300 according to a third embodiment of the invention (that is, an apparatus capable of carrying out an OFDM reception method according to the third embodiment). In FIG. 17, components identical to or corresponding to the components of the OFDM receiving apparatus 100 shown in FIG. 1 are denoted by the same reference characters. The OFDM receiving apparatus 300 in the third embodiment differs from the OFDM receiving apparatus 100 in FIG. 1 in that it includes a frequency deinterleaving unit 317 in an OFDM demodulation unit 310, includes a group number conversion unit 336 in the carrier analysis unit 330, and supports frequency interleaved OFDM modulated signals.

(3-2) Main Steps in the OFDM Reception Method

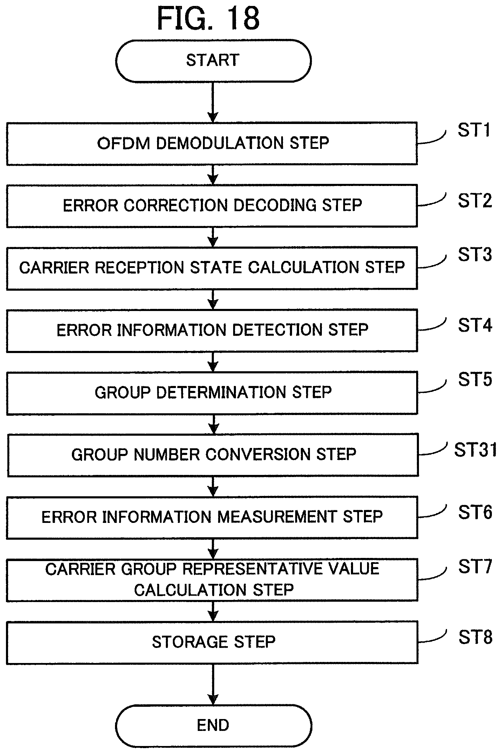

FIG. 18 is a flowchart schematically showing the main steps in the OFDM reception method according to the third embodiment. In FIG. 18, steps identical to or corresponding to the steps shown in FIG. 2 are given the same step numbers. The OFDM reception method according to the third embodiment differs from the OFDM reception method according to the first embodiment shown in FIG. 2 in that it includes a further group number conversion step (step ST31) for, when the OFDM modulated signal has been frequency interleaved, decoding the transmitted carrier numbers used in the transmission of those of the error correction processing units of data in which errors occur, and discriminating the carrier groups in which those transmitted carrier numbers are included. With the OFDM reception method according to the third embodiment, the reception level and the error occurrence situation can be ascertained in correspondence to each carrier group even when a frequency interleaved OFDM modulated signal is input.

(3-3) Detailed Description of the OFDM Reception Apparatus 300 and the OFDM Reception Method

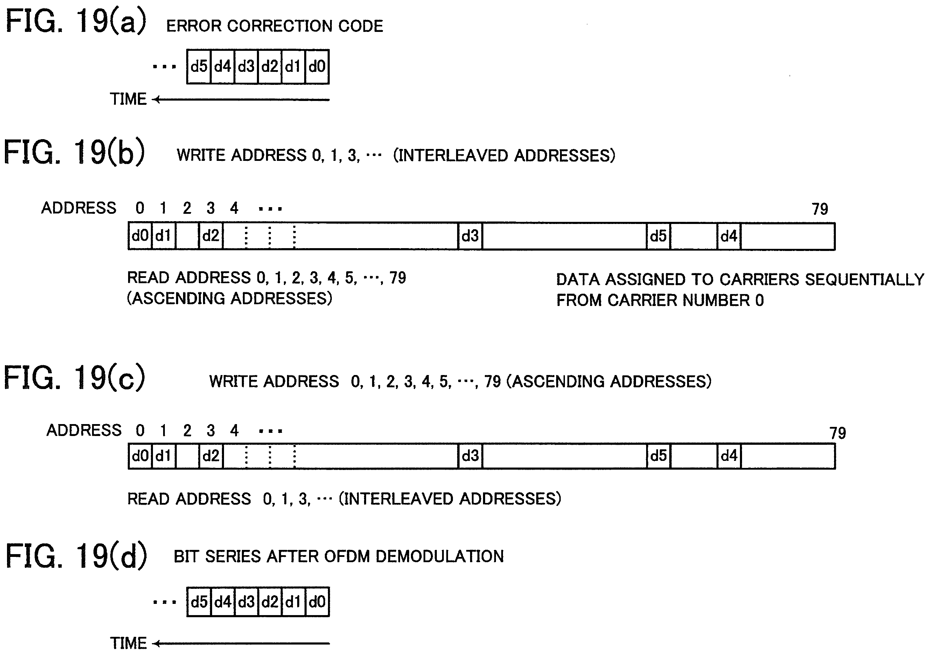

Frequency interleaving is realized by rearranging the carriers to which a transmitted signal bit series is allocated according to prescribed interleaving rules and applying OFDM modulation to the carriers; the order of the carriers does not change in the OFDM demodulating operation in the OFDM demodulation unit 310. When the OFDM transmission apparatus transmits error correction coded data shown in FIG. 19(a) in the order of d0, d1, d2, ..., the data are written in a buffer at addresses following prescribed interleaving rules as shown in FIG. 19(b). At the time of OFDM modulation, the data are sequentially read from address 0 and assigned to the respective carriers, thereby generating a frequency interleaved OFDM modulated signal.

After the OFDM receiving apparatus 300 receives the frequency interleaved OFDM modulated signal, processing up to the equalization unit 113 is performed regardless of whether the signal is frequency interleaved or not. Data output from the equalization unit 113 are sequentially written in a buffer from address 0 in the frequency deinterleaving unit 317 as shown in FIG.

19(c) and read out in the address order following the interleaving rules applied in the OFDM transmission apparatus and rearranged, resulting in the original transmitted bit series as shown in FIG. 19(d). The above description concerning frequency interleaving illustrates only an example of the frequency interleaving process; other processing methods may be employed.

In the third embodiment, since RS decoded data output from the error correction decoding unit 102 are not a bit series transmitted in sequence in ascending order of carrier number 0, 1, ..., 79, the output data are not in correct correspondence to RS unit positions of the carriers used for transmission.

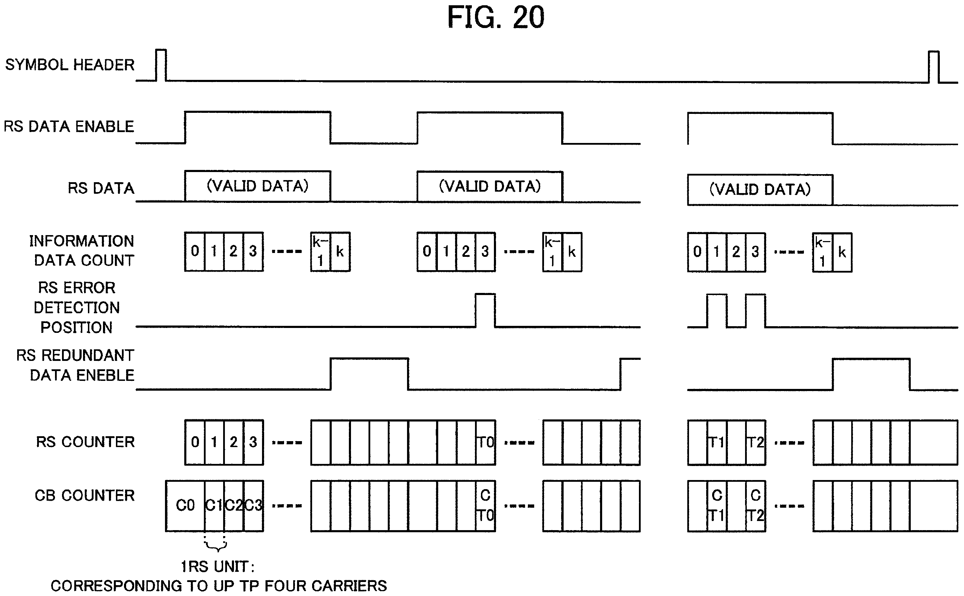

From the group number conversion unit 336, an error information measurement unit 333 obtains the group number that corresponds to a carrier number on which RS unit data having errors was transmitted. The detailed operation of the error information measurement unit 333 will be described using FIG. 20. In FIG. 20, signals with the same names as in FIG. 7, which was used in the first embodiment, represent the same signals as in the first embodiment. In FIG. 20, RS counter values when an RS error detection position signal is "1" are represented as T0, T1, T2 in order from a start of a symbol.

Before output of the RS data at the start of the symbol begins, the group number conversion unit 336 starts reading modulation scheme information, applying the same interleaving rules as applied to the buffer read addresses in the frequency deinterleaving unit 317 to the order of carriers in the demodulation information table 115, counts the cumulative number of transmitted bits corresponding to the modulation scheme with a CB counter, and reads the modulation scheme information until a value of the CB counter reaches eight bits, which is equal to the RS unit.

The carrier numbers that are read until the CB counter value reaches eight bits are stored as current carrier numbers CCn (n = 0, ..., 3). As 64-QAM, 16-QAM, and QPSK are supported as modulation schemes, six, four, and two bits can be transmitted per carrier, respectively, and up to four carriers can be used per RS unit, so a maximum of four current carrier numbers CCn must be held. Since no data are transmitted in the carrier mask state, those carrier numbers are not held as current carrier numbers CCn.

The current carrier numbers CCn are calculated every time an RS enable becomes "1", as described above, and are output to the error information measurement unit 333.

When the RS error detection position is "1", the group number conversion unit 336 determines to which ones of the groups determined by the carrier numbers held as the current carrier numbers CCn belong, and outputs them to the error information measurement unit 333 as error occurrence groups EGn (n = 0, ..., 3). The number of valid error occurrence groups EGn can be greater than one or the error occurrence groups EGn may all be the same group.

The error information measurement unit 333 continues to hold the measured error information value for each group for the entire symbol period and increments the measured error information value for the corresponding group when the error occurrence group EGn is valid. In the first embodiment, the measured error information value can be written in the memory 134 upon completion of measurement for each group in sequence from group 0; in the third embodiment, the measured values are written in the memory 134 after the measurements for all the carriers of all the groups in the symbol are completed.

In the first embodiment, the measured error information value is incremented in RS units; in the third embodiment, it is incremented in units of a number of carriers, so the measured values become large.

Since processing in the reception level shaping unit 132 is not affected by frequency interleaving, the reception level shaping unit 132 in the third embodiment operates as in the first embodiment.

(3-4) Effects of the Third Embodiment

As described above, with the OFDM receiving apparatus 300 and the OFDM reception method according to the third embodiment, due to the addition of a mechanism for converting group numbers, carriers can be mapped to RS units even for a frequency interleaved OFDM modulated signal, allowing the reception level and the error occurrence situation in RS decoding to be ascertained for each carrier group.

(4) Fourth Embodiment

(4-1) Main Structure of the OFDM Reception Apparatus 400

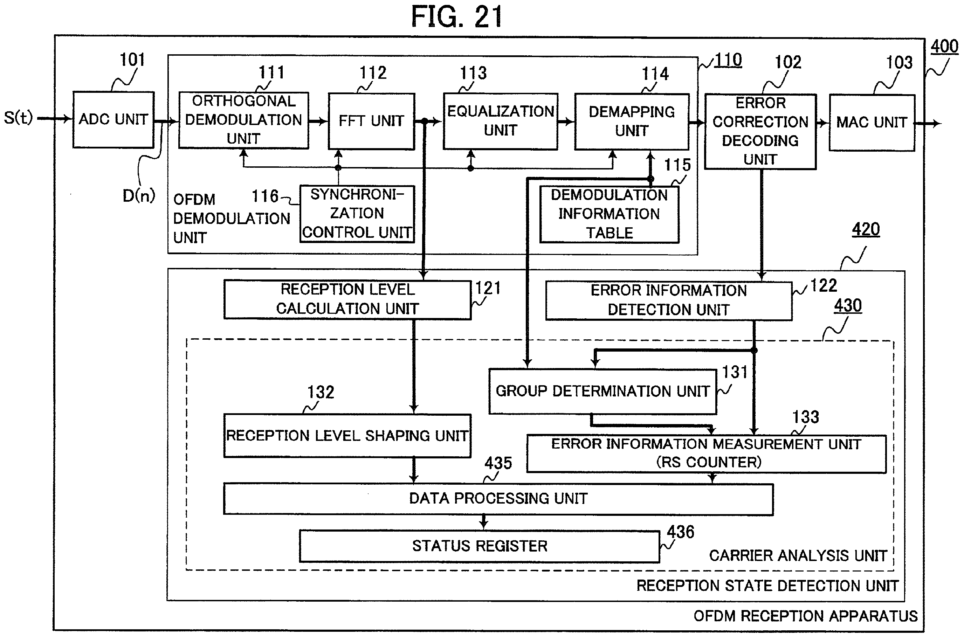

FIG. 21 is a block diagram schematically showing a configuration of an OFDM reception apparatus 400 according to a fourth embodiment of the invention (that is, an apparatus capable of carrying out an OFDM reception method according to the fourth embodiment). In FIG. 21, components identical to or corresponding to the components of the OFDM receiving apparatus 100 shown in FIG. 1 are denoted by the same reference characters. The OFDM receiving apparatus 400 according to the fourth embodiment differs from the OFDM receiving apparatus 100 in the first embodiment in that a carrier analysis unit 430 includes a data processing unit 435 and a status register 436 in place of the memory 134 (FIG. 1).

(4-2) Main Steps in the OFDM Reception Method

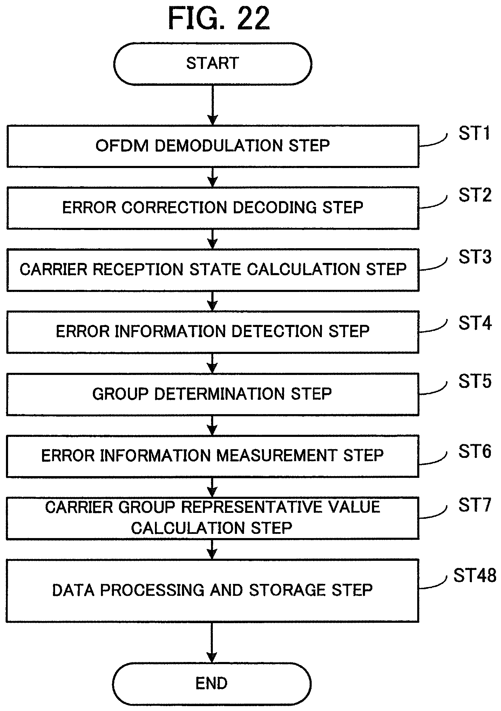

FIG. 22 is a flowchart schematically showing main steps in the OFDM reception method according to the fourth embodiment. In FIG. 22, steps identical to or corresponding to the steps shown in FIG. 2 are given the same step numbers. The OFDM reception method according to the fourth embodiment differs from the OFDM reception method according to the first embodiment in that in place of the storage step (step ST8) it includes a step (step ST48) for processing data and storing the processing results. As shown in FIG. 22, the OFDM reception method according to the fourth embodiment includes an OFDM demodulation step (step ST1) for demodulating a received OFDM modulated signal and generating a transmitted signal bit series based on the OFDM modulated signal, an error correction decoding step (step ST2) for generating a data series in error correction processing units by performing error correction decoding of the transmitted signal bit series generated in the OFDM demodulation step, a carrier reception state calculation step (step ST3) for calculating parameter values on a carrier-by-carrier basis from the OFDM modulated signal as indices of reception state quality, and an error information detection step (step ST4) for detecting the state of transmission error detection and correction in the error correction decoding step. The OFDM reception method according to the fourth embodiment also includes a grouping step (step ST5) for discriminating a plurality of carrier groups comprising series of a first prescribed number of consecutive carriers or data series of a prescribed second number of error correction processing units, an error information measurement step (step ST6) for measuring an output from the error information detection step in units of the carrier groups, for each of the plurality of carrier groups determined in the grouping step, and a carrier group representative value calculation step (step ST7) for calculating a representative value for each of the carrier groups according to the parameter values output in the carrier reception state calculation step. The OFDM reception method according to the fourth embodiment further includes the step (step ST48) for processing, in the data processing unit 435 as a data processing means, the representative values output in the carrier group representative value calculation step (step ST7) and the results of said measuring output from the error information measurement step (step ST6) to reduce the amount of information, and storing the processed representative values and results of said measuring in the status register 436, which functions as a storage means.

(4-3) Detailed Description of the OFDM Reception Apparatus 400 and the OFDM Reception Method

Next the operation of the carrier analysis unit 430 as part of a reception state detection unit 420 of the OFDM receiving apparatus 400 will be described. In the first embodiment, the representative value of the reception level calculated for each group by the reception level shaping unit 132 and the number of RS corrections calculated for each group by the error information measurement unit 133 are written in sequence, as they are calculated, at predetermined addresses and data bit positions in the memory 134, in accordance with the result of grouping by the group determination unit 131. The memory 134 in the first embodiment is thus always updated with the latest data, so the amount of data that can be held in the memory 134 is limited by the actual capacity of the memory 134. In the fourth embodiment, in order to record the operation state for a period of time that exceeds the capacity of the memory 134, the data processing unit 435 processes the representative values output from the reception level shaping unit 132 and the results of said measuring output from the error information measurement unit 133, processes the data to be stored, and stores a reduced volume of processed data in the status register 436. The status register 436 stores data in a different format than the memory 134 in the first embodiment. The status register 436 holds multiple values output from the data processing unit 435, but its capacity, which depends on the quantity of data processed in the data processing unit 435, is significantly smaller than the capacity of the memory 134 in the first embodiment.

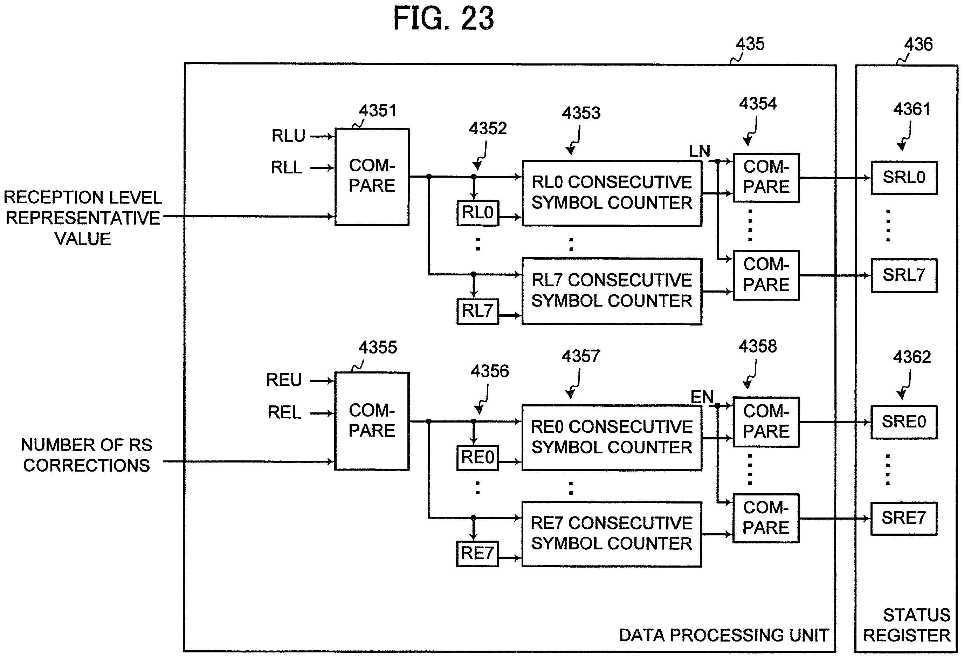

The operation of the data processing unit 435 will be described next. FIG. 23 is a block diagram schematically showing exemplary configurations of the data processing unit 435 and the status register 436 in the OFDM receiving apparatus 400 according to the fourth embodiment. For each group, the data processing unit 435 receives a representative value of the reception level from the reception level shaping unit 132 and the number of RS corrections from the error information measurement unit 133. In the data processing unit 435, a proper range and an improper run length are preset for the reception level, and a permissible range and an impermissible run length are preset for the number of RS corrections.

The data processing unit 435 compares the representative value of the reception level with an upper limit value RLU and a lower limit value RLL of the proper range of the reception level to decide whether the representative value of the reception level falls within the proper range or not. An RL$n$ flag ($n$ is an integer from 0 to 7) 4352 is prepared for each group; the RL$n$ flag is set to "0" when the representative value of the reception level is within the proper range and to "1" when it is outside the proper range. Since data in each group are updated at each OFDM symbol, the data processing unit 435 performs similar decisions for each symbol and continuously updates the RL$n$ flags 4352. For a group for which the RL$n$ flag is "1" over a consecutive run of symbols, the data processing unit 435 counts the number of consecutive symbols with an RL$n$ consecutive symbol counter 4353 and compares it with the improper run length LN. When the value of the RL$n$ consecutive symbol counter 4353 is greater than an improper run length LN, a "1" is likewise stored in an SRL$n$ flag ($n$ is an integer from 0 to 7) 4361 prepared for each group in the status register 436. Once a "1" is stored in the SRL$n$ flag 4361, the "1" continues to be held as the SRL$n$ flag 4361 unless the OFDM receiving apparatus 400 is powered down or a command to clear the flag to "0" is input from an external device (a CPU, for example). Unless the number of symbols for which the RLn flag 4352 is "1" exceeds the improper run length LN, the SRL$n$ flag 4261 remains "0".

The data processing unit 435 similarly compares the number of RS corrections with an upper limit value REU and a lower limit value REL of the permissible range for the number of RS corrections, to decide whether the number of RS corrections falls within the permissible range or not. An RE$n$ flag ($n$ is an integer from 0 to 7) 4356 is prepared for each group; the RE$n$ flag is set to "0" when the number of RS corrections is within the proper range and to "1" when it is outside the proper range. Since the group data are updated for each OFDM symbol, the data processing unit 435 performs similar decisions for each symbol and continuously updates the RE$n$ flag 4356. For a group for which the RE$n$ flag 4356 is "1" over a consecutive run of symbols, the data processing unit 435 counts the number of consecutive symbols with an RE$n$ consecutive symbol counter 4357 and compares it with the impermissible run length EN. When the value of the RE$n$ consecutive symbol counter 4357 is greater than the impermissible run length EN, a "1" is likewise stored in an SRE$n$ flag ($n$ is an integer from 0 to 7) 4362 prepared for each group in the status register 436. Once a "1" is stored in the SRE$n$ flag 4362, the "1" continues to be held as the SRE$n$ flag 4362 unless the OFDM receiving apparatus 400 is powered down or a command to clear the flag to "0" is input from an external device (a CPU for example). Unless the number of symbols for which the RE$n$ flag 4356 is "1" exceeds the impermissible run length EN, the SRE$n$ flag 4362 remains "0".

To enable the CPU to know the time (approximate time) at which either flag in the status register 436 changes to "1", the status register 436 may be configured to notify the CPU with an interrupt when either the SRL$n$ flag 4361 or the SRE$n$ flag 4362 becomes "1", or the CPU may periodically poll the status register 436.

Although FIG. 21 shows a structure that does not include the memory 134 of the first embodiment, the OFDM reception apparatus in the fourth embodiment may be configured to use a memory similar to the memory 134 of the first embodiment in addition to the data processing unit 435 and the status register 436. When such a configuration is adopted, the OFDM reception apparatus can store both the current state and the state resulting from operation over a lengthy period of time.

The processing performed by the data processing unit 435 is not limited to the processing described above; it may perform other processes appropriate for parameters detected in the reception state detection unit 420.

(4-4) Effects of the Fourth Embodiment

As described above, with the OFDM reception apparatus and the reception method according to the fourth embodiment, information on whether a set condition has occurred or not during the operation of the OFDM receiving apparatus 400 can be maintained in the status register 436 with a small storage capacity for a long time period.

## INDUSTRIAL APPLICABILITY

The OFDM receiving apparatuses 100, 200, 300, 400 and the OFDM reception methods according to the embodiments of the present invention are applicable to devices (e.g., digital television receivers, digital television reception apparatuses, wired terminal devices, personal computers, or the like) capable of performing communication over a network in which signals are transmitted in a wired manner (for example, an existing metal-line network or power line communication (PLC)). The OFDM receiving apparatuses 100, 200, 300, 400 and the OFDM reception methods according to the embodiments of the present invention are also applicable to devices (e.g., terrestrial digital television broadcast receivers, terrestrial digital television broadcast reception apparatuses, wireless terminal devices, personal computers, or the like) capable of performing communication over a network in which signals are transmitted in a wireless manner.

## REFERENCE CHARACTERS

100, 200, 300, 400 OFDM reception apparatus; 101 ADC unit; 102 error correction decoding unit (error correction decoding means); 103 MAC unit; 110, 210, 310 OFDM demodulation unit (OFDM demodulation means); 111 orthogonal demodulation unit; 112 FFT unit; 113 equalization unit; 114 demapping unit; 115, 215 demodulation information table; 116 synchronization control unit; 120, 220, 320, 420 reception state detection unit; 121 reception level calculation unit (carrier reception state calculation means); 122 error information detection unit (error information detection means); 130, 230, 330, 430 carrier analysis unit; 131 group determination unit (group determination means, carrier group boundary setting means); 132 reception level shaping unit (carrier group representative value calculation means); 133, 333 error information measurement unit (error information measurement means); 134 memory (storage means); 235 range determination unit; 317 frequency deinterleaving unit; 336 group number conversion unit (group number conversion means); 435 data processing unit; 436 status register.

**Claims**

**1.** An OFDM reception apparatus comprising:

an OFDM demodulation means (110) for demodulating a received OFDM modulated signal and generating a transmitted signal bit series based on the OFDM modulated signal;

an error correction decoding means (102) for generating a data series in error correction processing units of data by performing error correction decoding of the transmitted signal bit series generated by the OFDM demodulation means;

a carrier reception state calculation means (121) for calculating parameter values on a carrier-by-carrier basis from the OFDM modulated signal as indices of reception state quality;

an error information detection means (122) for detecting a state of transmission error detection and correction in the error correction decoding means and outputting information of the transmission error detection and correction in the error correction processing units of data; **characterized by** the apparatus further comprising:

grouping means (131) for performing a grouping operation by dividing a frequency band to which carriers constituting the OFDM modulated signal belong into a plurality of carrier groups by grouping consecutive carriers on a frequency axis and dividing the data series in the error correction processing units of data, into a continuous plurality of data groups corresponding to the plurality of carrier groups;

an error information measurement means (133) for measuring the information of the transmission error detection and correction from the error information detection means in units of the data groups, for each of the plurality of data groups determined by the grouping means; and

a carrier group representative value calculation means (132) for calculating a representative value for each of the carrier groups according to the parameter values output from the carrier reception state calculation means.

2. The OFDM reception apparatus of claim 1, further comprising a storage means (134) in which the representative values output from the carrier group representative value calculation means and results of said measuring output from the error information measurement means are sequentially written to store the representative values and the results of said measuring in mutual correspondence.

3. The OFDM reception apparatus of claim 1 or 2, wherein the grouping means includes a carrier group boundary setting means (131) for setting a carrier of highest frequency in each of the plurality of carrier groups as a boundary of the carrier groups.

4. The OFDM reception apparatus of any one of claims 1 to 3, wherein the grouping means uses a grouping starting carrier number, CNS, indicating the carrier number at which to start the grouping operation and a fixed number of carriers to perform the grouping operation.

5. The OFDM reception apparatus of any one of claims 1 to 4, wherein the grouping means keeps a fraction flag indicating whether a total number of bits transmittable on the carrier included in the carrier group on which the grouping operation is performed is not divisible by the error correction processing unit, producing a fractional value.

6. The OFDM reception apparatus of any one of claims 1 to 5, further comprising a group number conversion means (336) for, when the OFDM modulated signal has been frequency interleaved, decoding a transmitted carrier number used in transmission of data in the error correction processing units of data in which an error occurs out of the data series in the error correction processing units of data and discriminating the carrier group in which the transmitted carrier number is included;

wherein the error information measurement means measures error information based on carrier group information discriminated by the group number conversion means.

7. The OFDM reception apparatus of any one of claims 1 to 5, wherein the grouping means performs the grouping operation in synchronization with presence or absence of an update of modulation scheme information.

8. The OFDM reception apparatus of claim 2, further comprising a data processing means (435) for processing the representative values output from the carrier group representative value calculation means and the results of said measuring output from the error information measurement means to reduce an amount of information stored in the storage means.

9. An OFDM reception method comprising:

an OFDM demodulation step for demodulating a received OFDM modulated signal and generating a transmitted signal bit series based on the OFDM modulated signal;

an error correction decoding step for generating a data series in error correction processing units of data by performing error correction decoding of the transmitted signal bit series generated in the OFDM demodulation step;

a carrier reception state calculation step for calculating parameter values on a carrier-by-carrier basis from the OFDM modulated signal as indices of reception state quality;
an error information detection step for detecting a state of transmission error detection and correction in the error correction decoding step and outputting information of the transmission error detection and correction in the error correction processing units of data; **characterized by** the method further comprising:

a grouping step for performing a grouping operation by dividing a frequency band to which carriers constituting the OFDM modulated signal belong into a plurality of carrier groups by grouping consecutive carriers on a frequency axis and dividing the data series in the error correction processing units of data, into a continuous plurality of data groups corresponding to the plurality of carrier groups;

an error information measurement step for measuring the information of the transmission error detection and correction in the error information detection step in units of the data groups, for each of the plurality of data groups determined in the grouping step; and

a carrier group representative value calculation step for calculating a representative value for each of the carrier groups according to the parameter values output in the carrier reception state calculation step.

10. The OFDM reception method of claim 9, further comprising a storage step in which the representative values output from the carrier group representative value calculation step and results of said measuring output from the error information measurement step are sequentially written to store the representative values and the results of said measuring in mutual correspondence.

11. The OFDM reception method of claim 9 or 10, wherein the grouping step includes a carrier group boundary setting step for setting a carrier of highest frequency in each of the plurality of carrier groups as a boundary of the carrier groups.

12. The OFDM reception method of any one of claims 9 to 11, wherein the grouping step uses a grouping starting carrier number, CNS, indicating the carrier number at which to start the grouping operation and a fixed number of carriers to perform the grouping operation.

13. The OFDM reception method of any one of claims 9 to 12, wherein the grouping step keeps a fraction flag indicating whether a total number of bits transmittable on the carrier included in the carrier group on which the grouping operation is performed is not divisible by the error correction processing unit, producing a fractional value.

14. The OFDM reception method of any one of claims 9 to 13, further comprising a group number conversion step for, when the OFDM modulated signal has been frequency interleaved, decoding a transmitted carrier number used in the transmission of data in the error correction processing units of data in which an error occurs out of the data series in the error correction processing units of data, and discriminating the carrier group in which the transmitted carrier number is included;

wherein the error information measurement step measures error information based on carrier group information discriminated in the group number conversion step.

15. The OFDM reception method of any one of claims 9 to 13, wherein the grouping step performs the grouping operation in synchronization with presence or absence of an update of modulation scheme information.

16. The OFDM reception method of claim 10, further comprising a data processing step for processing the representative values output in the carrier group representative value calculation step and the results of said measuring output from the error information measurement step to reduce an amount of information stored in the storage step.

**Patentansprüche**

1. OFDM-Empfangsvorrichtung, umfassend:

ein OFDM-Demodulationsmittel (110) zum Demodulieren eines empfangenen OFDM-modulierten Signals und zum Erzeugen einer Sendesignal-Bitreihe basierend auf dem OFDM-modulierten Signal;
ein Fehlerkorrektur-Dekodierungsmittel (102) zum Erzeugen einer Datenreihe in Fehlerkorrektur-Verarbeitungseinheiten von Daten durch Durchführen einer Fehlerkorrektur-Decodierung der von dem OFDM-Demodulationsmittel erzeugten Sendesignal-Bitreihe;
ein Träger-Empfangszustandsberechnungsmittel (121) zum Berechnen von Parameterwerten auf Träger-zu-Träger-Basis aus dem OFDM-modulierten Signal als Indizes der Empfangszustandsqualität;
ein Fehlerinformations-Erfassungsmittel (122) zum Erfassen eines Zustands der Übertragungsfehlererkennung und - korrektur in dem Fehlerkorrektur-Decodierungsmittel und zum Ausgeben von Informationen über die Übertragungsfehlererkennung und -korrektur in den Fehlerkorrektur-Verarbeitungseinheiten von Daten;

**dadurch gekennzeichnet, dass** die Vorrichtung ferner umfasst:

Gruppierungsmittel (131) zum Durchführen eines Gruppierungsvorgangs durch Unterteilen eines Frequenzbandes dessen das OFDM-modulierte Signal bildende Träger in eine Vielzahl von Trägergruppen durch Gruppieren aufeinanderfolgender Träger auf einer Frequenzachse und Unterteilen der Datenreihe in den Fehlerkorrektur-Verarbeitungseinheiten von Daten in eine kontinuierliche Vielzahl von Datengruppen entsprechend der Vielzahl von Trägergruppen; ein Fehlerinformationsmessmittel (133) zum Messen der Information der Übertragungsfehlererkennung und -korrektur von dem Fehlerinformationsmessmittel in Einheiten der Datengruppen für jede der Vielzahl von durch das Gruppierungsmittel bestimmten Datengruppen; und ein Trägergruppen-Repräsentationswert-Berechnungsmittel (132) zum Berechnen eines repräsentativen Wertes für jede der Trägergruppen gemäß den von dem Träger-Empfangszustandsberechnungsmittel ausgegebenen Parameterwerten.

2. OFDM-Empfangsvorrichtung nach Anspruch 1, ferner umfassend ein Speichermittel (134), in dem die repräsentativen Werte, die von dem Trägergruppen-Repräsentationswert-Berechnungsmittel ausgegeben werden, und die Ergebnisse der Messausgabe von dem Fehlerinformationsmessmittel sequentiell geschrieben werden, um die repräsentativen Werte und die Ergebnisse der Messung in gegenseitiger Übereinstimmung zu speichern.

3. OFDM-Empfangsvorrichtung nach Anspruch 1 oder 2, wobei das Gruppierungsmittel ein Trägergruppen-Begrenzungsmittel (131) zum Einstellen eines Trägers höchster Frequenz in jeder der Vielzahl von Trägergruppen als Grenze der Trägergruppen beinhaltet.

4. OFDM-Empfangsvorrichtung nach einem der Ansprüche 1 bis 3, wobei das Gruppierungsmittel eine Gruppierungsstarttragenummer, CNS, verwenden, die die Trägernummer angibt, bei der der Gruppierungsvorgang gestartet wird, und eine feste Anzahl von Trägern, um den Gruppierungsvorgang durchzuführen.

5. OFDM-Empfangsvorrichtung nach einem der Ansprüche 1 bis 4, wobei das Gruppierungsmittel ein Bruchflag hält, das angibt, ob eine Gesamtzahl von Bits, die auf dem Träger übertragbar sind, der in der Trägergruppe enthalten ist, auf der die Gruppierung durchgeführt wird, nicht durch die Fehlerkorrektur-Verarbeitungseinheit teilbar ist, was einen Bruchwert erzeugt.

6. OFDM-Empfangsvorrichtung nach einem der Ansprüche 1 bis 5, ferner umfassend eine Gruppennummern-Konversionsmittel (336) zum Dekodieren einer übertragenen Trägernummer, die bei der Übertragung von Daten in den Fehlerkorrektur-Verarbeitungseinheiten von Daten verwendet wird, in denen ein Fehler aus der Datenreihe in den Fehlerkorrektur-Verarbeitungseinheiten von Daten auftritt, und zum Unterscheiden der Trägergruppe, in der die übertragene Trägernummer enthalten ist, wenn das OFDM-modulierte Signal frequenzüberlagert wurde; wobei die Fehlerinformationsmessmittel Fehlerinformationen basierend auf Trägergruppeninformationen messen, die durch das Gruppennummern-Konversionsmittel unterschieden werden.

7. OFDM-Empfangsvorrichtung nach einem der Ansprüche 1 bis 5, wobei die Gruppierungsmittel den Gruppierungsvorgang synchron mit dem Vorhandensein oder Fehlen einer Aktualisierung von Modulationsschema-Informationen durchführen.

8. OFDM-Empfangsvorrichtung nach Anspruch 2, ferner umfassend ein Datenverarbeitungsmittel (435) zum Verarbeiten der repräsentativen Werte, die von dem Trägergruppen-Repräsentationswert-Berechnungsmittel ausgegeben werden, und der Ergebnisse der Messausgabe von dem Fehlerinformationsmessmittel, um eine Menge von Informationen, die in dem Speichermittel gespeichert sind, zu reduzieren.

9. OFDM-Empfangsverfahren, umfassend:

einen OFDM-Demodulationsschritt zum Demodulieren eines empfangenen OFDM-modulierten Signals und zum Erzeugen einer Sendesignal-Bitreihe basierend auf dem OFDM-modulierten Signal; einen Fehlerkorrektur-Dekodierungsschritt zum Erzeugen einer Datenreihe in Fehlerkorrektur-Verarbeitungseinheiten von Daten durch Durchführung einer Fehlerkorrektur-Dekodierung der in dem OFDM-Demodulationsschritt erzeugten Sendesignal-Bitreihe; einen Trägerempfangszustands-Berechnungsschritt zum Berechnen von Parameterwerten auf Träger-zu-Träger-Basis aus dem OFDM-modulierten Signal als Indizes der Empfangszustandsqualität;

einen Fehlerinformations-Erfassungsschritt zum Erfassen eines Zustands der Übertragungsfehlererkennung und -korrektur in dem Fehlerkorrektur-Dekodierungsschritt und zum Ausgeben von Informationen über die Übertragungsfehlererkennung und - korrektur in den Fehlerkorrektur-Verarbeitungseinheiten von Daten;

**dadurch gekennzeichnet, dass** das Verfahren ferner umfasst:

einen Gruppierungsschritt zum Durchführen eines Gruppierungsvorgangs durch Unterteilen eines Frequenzbandes dessen das OFDM-modulierte Signal bildende Träger in eine Vielzahl von Trägergruppen durch Gruppieren aufeinanderfolgender Träger auf einer Frequenzachse und Unterteilen der Datenreihe in den Fehlerkorrektur-Verarbeitungseinheiten von Daten in eine kontinuierliche Vielzahl von Datengruppen entsprechend der Vielzahl von Trägergruppen;

einen Fehlerinformationsmessschritt zum Messen der Informationen der Übertragungsfehlererkennung und -korrektur im Fehlerinformationsmessschritt in Einheiten der Datengruppen für jede der Vielzahl von in dem Gruppierungsschritt bestimmten Datengruppen; und

einen Trägergruppen-Repräsentationswert-Berechnungsschritt zum Berechnen eines repräsentativen Wertes für jede der Trägergruppen gemäß den im Trägerempfangszustand-Berechnungsschritt ausgegebenen Parameterwerten.

10. OFDM-Empfangsverfahren nach Anspruch 9, ferner umfassend einen Speicherschritt, in dem die repräsentativen Werte, die aus dem Trägergruppen-Repräsentationswert-Berechnungsschritt ausgegeben werden, und die Ergebnisse der Messausgabe aus dem Fehlerinformationsmessschritt sequentiell geschrieben werden, um die repräsentativen Werte und die Ergebnisse der Messung in gegenseitiger Übereinstimmung zu speichern.

11. OFDM-Empfangsverfahren nach Anspruch 9 oder 10, wobei der Gruppierungsschritt einen Trägergruppen-Begrenzungsschritt zum Einstellen eines Trägers höchster Frequenz in jeder der Vielzahl von Trägergruppen als Begrenzung der Trägergruppen beinhaltet.

12. OFDM-Empfangsverfahren nach einem der Ansprüche 9 bis 11, wobei der Gruppierungsschritt eine Gruppierungsstarttragenummer, CNS, verwendet, die die Trägernummer angibt, bei der der Gruppierungsvorgang gestartet wird, und eine feste Anzahl von Trägern, um den Gruppierungsvorgang durchzuführen.

13. OFDM-Empfangsverfahren nach einem der Ansprüche 9 bis 12, wobei der Gruppierungsschritt ein Bruchflag hält, das angibt, ob eine Gesamtzahl von Bits, die auf dem Träger übertragbar sind, der in der Trägergruppe enthalten ist, auf der die Gruppierung durchgeführt wird, nicht durch die Fehlerkorrektur-Verarbeitungseinheit teilbar ist, wodurch ein Bruchwert erzeugt wird.

14. OFDM-Empfangsverfahren nach einem der Ansprüche 9 bis 13, ferner umfassend einen Gruppennummer-Konversionsschritt zum Dekodieren einer übertragenen Trägernummer, die bei der Übertragung von Daten in den Fehlerkorrektur-Verarbeitungseinheiten von Daten verwendet wird, in denen ein Fehler aus der Datenreihe in den Fehlerkorrektur-Verarbeitungseinheiten von Daten auftritt, und zum Unterscheiden der Trägergruppe, in der die übertragene Trägernummer enthalten ist, wenn das OFDM-modulierte Signal frequenzüberlagert wurde; wobei der Fehlerinformationsmessschritt Fehlerinformationen basierend auf Trägergruppeninformationen misst, die in dem Gruppennummer-Konversionsschritt unterschieden werden.

15. OFDM-Empfangsverfahren nach einem der Ansprüche 9 bis 13, wobei der Gruppierungsschritt den Gruppierungsvorgang synchron mit dem Vorhandensein oder Fehlen einer Aktualisierung von Modulationsschema-Informationen durchführt.

16. OFDM-Empfangsverfahren nach Anspruch 10, ferner umfassend einen Datenverarbeitungsschritt zum Verarbeiten der repräsentativen Werte, die in dem Trägergruppen-Repräsentationswert-Berechnungsschritt ausgegeben werden, und die Ergebnisse der Messausgabe aus dem Fehlerinformationsmessschritt, um eine Menge an Informationen, die in dem Speicherschritt gespeichert sind, zu reduzieren.

**Revendications**

1. Appareil de réception OFDM comprenant :

un moyen de démodulation OFDM (110) pour démoduler un signal modulé OFDM reçu et produire une série de bits de signal émise sur la base du signal modulé OFDM ;

un moyen de décodage à correction d'erreurs (102) pour produire une série de données dans des unités de données de traitement à correction d'erreurs en effectuant un décodage à correction d'erreurs de la série de bits de signal émise produite par le moyen de démodulation OFDM ;

un moyen de calcul d'état de réception de porteuse (121) pour calculer des valeurs de paramètre sur une base porteuse par porteuse du signal modulé OFDM en tant qu'indices de qualité d'état de réception ;

un moyen de détection d'informations d'erreurs (122) pour détecter un état de détection et de correction d'erreurs d'émission dans le moyen de décodage à correction d'erreurs et sortir des informations de la détection et de correction d'erreurs d'émission dans les unités de données de traitement à correction d'erreurs ;

**caractérisé en ce que** l'appareil comprend en outre :

un moyen de groupage (131) pour effectuer une opération de groupage en divisant une bande de fréquences à laquelle des porteuses constituant le signal modulé OFDM appartiennent en une pluralité de groupes de porteuses en groupant des porteuses consécutives sur un axe de fréquence et en divisant la série de données dans les unités de données de traitement à correction d'erreurs, en une pluralité continue de groupes de données correspondant à la pluralité de groupes de porteuses ;

un moyen de mesure d'informations d'erreurs (133) pour mesurer les informations de la détection et de correction d'erreurs d'émission provenant du moyen de détection d'informations d'erreurs dans des unités des groupes de données, pour chacun de la pluralité de groupes de données déterminés par le moyen de groupage ; et

un moyen de calcul de valeur représentative de groupe de porteuses (132) pour calculer une valeur représentative pour chacun des groupes de porteuses selon les valeurs de paramètre sorties en provenance du moyen de calcul d'état de réception de porteuse.

2. Appareil de réception OFDM selon la revendication 1, comprenant en outre un moyen de stockage (134) dans lequel les valeurs représentatives sorties en provenance du moyen de calcul de valeur représentative de groupe de porteuses et des résultats de ladite mesure sortis en provenance du moyen de mesure d'informations d'erreurs sont écrits de manière séquentielle pour stocker les valeurs représentatives et les résultats de ladite mesure dans une correspondance mutuelle.

3. Appareil de réception OFDM selon la revendication 1 ou 2, dans lequel le moyen de groupage inclut un moyen de fixation de frontière de groupe de porteuses (131) pour fixer une porteuse de la fréquence la plus haute dans chacun de la pluralité de groupes de porteuses en tant que frontière des groupes de porteuses.

4. Appareil de réception OFDM selon l'une quelconque des revendications 1 à 3, dans lequel le moyen de groupage utilise un numéro de porteuse de début de groupage, CNS, indiquant le numéro de porteuse auquel débuter l'opération de groupage et un nombre fixé de porteuses pour effectuer l'opération de groupage.

5. Appareil de réception OFDM selon l'une quelconque des revendications 1 à 4, dans lequel le moyen de groupage conserve un drapeau de fraction indiquant si un nombre total de bits transmissibles sur la porteuse incluse dans le groupe de porteuses sur lequel l'opération de groupage est effectuée n'est pas divisible par l'unité de traitement de correction d'erreurs, produisant une valeur fractionnaire.

6. Appareil de réception OFDM selon l'une quelconque des revendications 1 à 5, comprenant en outre un moyen de conversion de numéro de groupe (336) pour, lorsque le signal modulé OFDM a été entrelacé en ce qui concerne la fréquence, décoder un numéro de porteuse émise utilisé dans l'émission de données dans les unités de données de traitement à correction d'erreurs dans lesquelles une erreur se produit parmi les séries de données dans les unités de données de traitement à correction d'erreurs et faisant la discrimination du groupe de porteuses dans lequel le numéro de porteuse émise est inclus ; dans lequel le moyen de mesure d'informations d'erreurs mesure des informations d'erreurs sur la base d'informations de groupe de porteuses discriminées par le moyen de conversion de numéro de groupe.

7. Appareil de réception OFDM selon l'une quelconque des revendications 1 à 5, dans lequel le moyen de groupage effectue l'opération de groupage en synchronisation avec la présence ou l'absence d'une mise à jour d'informations de système de modulation.

8. Appareil de réception OFDM selon la revendication 2, comprenant en outre un moyen de traitement de données (435) pour traiter les valeurs représentatives sorties en provenance du moyen de calcul de valeur représentative de groupe de porteuses et les résultats de ladite mesure sortis en provenance du moyen de mesure d'informations d'erreurs pour réduire une quantité d'informations stockées dans le moyen de stockage.

**9.** Procédé de réception OFDM comprenant :

une étape de démodulation OFDM pour démoduler le signal modulé OFDM reçu et produire une série de bits de signal émis sur la base du signal modulé OFDM ;
une étape de décodage à correction d'erreurs pour produire une série de données dans des unités de données de traitement à correction d'erreurs en effectuant un décodage à correction d'erreurs de la série de bits de signal émise produite dans l'étape de démodulation OFDM ;
une étape de calcul d'état de réception de porteuse pour calculer des valeurs de paramètre sur une base porteuse par porteuse à partir du signal modulé OFDM en tant qu'indices de qualité d'état de réception ;
une étape de détection d'informations d'erreurs pour détecter un état de détection et de correction d'erreurs d'émission dans l'étape de décodage à correction d'erreurs et sortir des informations de la détection et de la correction d'erreurs de d'émission dans les unités de données de traitement à correction d'erreurs ;
**caractérisé en ce que** le procédé comprend en outre :

une étape de groupage pour effectuer une opération de groupage en divisant une bande de fréquences à laquelle des porteuses constituant le signal modulé OFDM appartiennent en une pluralité de groupes de porteuses en groupant des porteuses consécutives sur un axe de fréquence et en divisant la série de données dans les unités de données de traitement à correction d'erreurs, en une pluralité continue de groupes de données correspondant à la pluralité de groupes de porteuses ;
une étape de mesure d'informations d'erreurs pour mesurer les informations de la détection et de la correction d'erreurs d'émission dans l'étape de détection d'informations d'erreurs dans des unités des groupes de données, pour chacun de la pluralité de groupes de données déterminés dans l'étape de groupage ; et
une étape de calcul de valeur représentative de groupe de porteuses pour calculer une valeur représentative pour chacun des groupes de porteuses selon les valeurs de paramètre sorties dans l'étape de calcul d'état de réception de porteuse.

**10.** Procédé de réception OFDM selon la revendication 9, comprenant en outre une étape de stockage dans laquelle les valeurs représentatives sorties en provenance de l'étape de calcul de valeur représentative de groupe de porteuses et des résultats de ladite mesure sortis en provenance de l'étape de mesure d'informations d'erreurs sont écrits de manière séquentielle pour stocker les valeurs représentatives et les résultats de ladite mesure dans une correspondance mutuelle.

**11.** Procédé de réception OFDM selon la revendication 9 ou 10, dans lequel l'étape de groupage inclut une étape de fixation de frontière de groupe de porteuses pour fixer une porteuse de la fréquence la plus haute dans chacune de la pluralité de groupes de porteuses en tant que frontière des groupes de porteuses.

**12.** Procédé de réception OFDM selon l'une quelconque des revendications 9 à 11, dans lequel l'étape de groupage utilise un numéro de porteuse de début de groupage, CNS, indiquant le numéro de porteuse auquel commencer l'opération de groupage et un nombre fixé de porteuses pour effectuer l'opération de groupage.

**13.** Procédé de réception OFDM selon l'une quelconque des revendications 9 à 12, dans lequel l'étape de groupage conserve un drapeau de fraction indiquant si un nombre total de bits transmissibles sur la porteuse incluse dans le groupe de porteuses sur lequel l'opération de groupage est effectuée n'est pas divisible par l'unité de traitement à correction d'erreurs, produisant une valeur fractionnaire.

**14.** Procédé de réception OFDM selon l'une quelconque des revendications 9 à 13, comprenant en outre une étape de conversion de numéro de groupe pour, lorsque le signal modulé OFDM a été entrelacé en ce qui concerne la fréquence, décoder un numéro de porteuse émise utilisé dans l'émission de données dans unités de données de traitement à correction d'erreurs dans lesquelles une erreur se produit parmi la série de données dans les unités de données de traitement à correction d'erreurs et la discrimination du groupe de porteuses dans lequel le numéro de porteuse émise est inclus ;
dans lequel l'étape de mesure d'informations d'erreurs mesure des informations d'erreurs sur la base d'informations de groupe de porteuses discriminées dans l'étape de conversion de numéro de groupe.

**15.** Procédé de réception OFDM selon l'une quelconque des revendications 9 à 13, dans lequel l'étape de groupage effectue l'opération de groupage en synchronisation avec la présence ou l'absence d'une mise à jour d'informations de système de modulation.

**16.** Procédé de réception OFDM selon la revendication 10, comprenant en outre une étape de traitement de données pour traiter les valeurs représentatives sorties dans l'étape de calcul de valeur représentative de groupe de porteuses et les résultats de ladite mesure sortis en provenance de l'étape de mesure d'informations d'erreurs pour réduire une quantité d'informations stockées dans l'étape de stockage.

## FIG. 1

*100*

**OFDM RECEPTION APPARATUS**

S(t) → **ADC UNIT** *101*

D(n)

*110*

**OFDM DEMODULATION UNIT**

- **ORTHOGONAL DEMODULATION UNIT** *111*
- **FFT UNIT** *112*
- **EQUALIZATION UNIT** *113*
- **DEMAPPING UNIT** *114*
- **SYNCHRONIZATION CONTROL UNIT** *116*
- **DEMODULATION INFORMATION TABLE** *115*

**ERROR CORRECTION DECODING UNIT** *102*

**MAC UNIT** *103*

*120*

**RECEPTION STATE DETECTION UNIT**

- **RECEPTION LEVEL CALCULATION UNIT** *121*
- **ERROR INFORMATION DETECTION UNIT** *122*

*130*

**CARRIER ANALYSIS UNIT**

- **GROUP DETERMINATION UNIT** *131*
- **RECEPTION LEVEL SHAPING UNIT** *132*
- **ERROR INFORMATION MEASUREMENT UNIT (RS COUNTER)** *133*
- **MEMORY** *134*

EP 2 897 315 B1

# FIG. 2

START

↓

OFDM DEMODULATION STEP — ST1

↓

ERROR CORRECTION DECODING STEP — ST2

↓

CARRIER RECEPTION STATE CALCULATION STEP — ST3

↓

ERROR INFORMATION DETECTION STEP — ST4

↓

GROUP DETERMINATION STEP — ST5

↓

ERROR INFORMATION MEASUREMENT STEP — ST6

↓

CARRIER GROUP REPRESENTATIVE VALUE CALCULATION STEP — ST7

↓

STORAGE STEP — ST8

↓

END

# FIG. 3

FRONT END

PAYLOAD

BACK END

| INFORMA-TION DATA | RED UND ANT DAT A | INFORMA-TION DATA | RED UND ANT DAT A | · · · · · · · · | INFORMA-TION DATA | RED UND ANT DAT A | NULL |
|---|---|---|---|---|---|---|---|

CODED DATA  CODED DATA  CODED DATA

# FIG. 4

NUMBER
OF BITS

CARRIER
MASK

64QAM            16QAM              QPSK

6

5

4

3

2

1

0    10    20    30   39  40    49  55  56  60    70   79    CARRIER
                                     50                       NUMBER

GROUP          GROUP         GROUP              GROUP
0              2             4                  6

      GROUP         GROUP         GROUP              GROUP
      1             3             5                  7

# FIG. 5

(CN0)

CARRIER
NUMBER
        0    1    2    3    4    5    6    7    8    9    10   11

        6b   6b   6b   6b   6b   6b   6b   6b   6b   6b   6b   6b   ...

NUMBER  8b   8b   8b   8b   8b   8b        8b   8b   8b            ...
OF RS
UNIT DATA   0    1    2    3    4    5    6    7    8
OUTPUTS

                        GROUP 0

# FIG. 6

| GROUP NUMBER<br>n | BOUNDARY INFORMATION<br>Gnb (n = 0, 1, ···, 7) |
|---|---|
| 0 | 5 |
| 1 | 11 |
| 2 | 17 |
| 3 | 23 |
| 4 | 29 |
| 5 | 34 |
| 6 | 37 |
| 7 | 40 |

# FIG. 7

EP 2 897 315 B1

# FIG. 8

| ADD-RESS | GROUP | RECEP-TION LEVEL | ERROR INFORMATION MEASUREMENT VALUE | |
|---|---|---|---|---|
| 0 | 0 | L0 | E0 | |
| 1 | 1 | L1 | E1 | |
| 2 | 2 | L2 | E2 | |
| 3 | 3 | L3 | E3 | 1ST SYMBOL |
| 4 | 4 | L4 | E4 | |
| 5 | 5 | L5 | E5 | |
| 6 | 6 | L6 | E6 | |
| 7 | 7 | L7 | E7 | |
| 8 | 0 | L0' | E0' | |
| 9 | 1 | L1' | E1' | 2ND SYMBOL |
| ⋮ | ⋮ | ⋮ | ⋮ | |
| 15 | 7 | L7' | E7' | |
| ⋮ | ⋮ | ⋮ | ⋮ | |
| Am0 | 0 | L0" | E0" | |
| Am1 | 1 | L1" | E1" | m–TH SYMBOL |
| ⋮ | ⋮ | ⋮ | ⋮ | |
| Am7 | 7 | L7" | E7" | |
| | | | | 1ST SYMBOL |
| ⋮ | ⋮ | ⋮ | ⋮ | |
| | | | | m–TH SYMBOL |

1ST FRAME (covers 1ST SYMBOL through m–TH SYMBOL)

2ND FRAME (covers 1ST SYMBOL through m–TH SYMBOL)

# FIG. 9

EP 2 897 315 B1

# FIG. 10

```
         START
           │
           ▼
┌──────────────────────────────┐   ST1
│   OFDM DEMODULATION STEP      │
└──────────────────────────────┘
           │
           ▼
┌──────────────────────────────┐   ST2
│ ERROR CORRECTION DECODING STEP│
└──────────────────────────────┘
           │
           ▼
┌──────────────────────────────┐   ST3
│ CARRIER RECEPTION STATE       │
│ CALCULATION STEP              │
└──────────────────────────────┘
           │
           ▼
┌──────────────────────────────┐   ST4
│ ERROR INFORMATION DETECTION   │
│ STEP                          │
└──────────────────────────────┘
           │
           ▼
┌──────────────────────────────┐
│   GROUP DETERMINATION STEP    │   ST25
│ (USING GROUPING STARTING      │
│  CARRIER NUMBER               │
│ CNS AND NUMBER OF GROUPED     │
│ CARRIERS CNUM                 │
└──────────────────────────────┘
           │
           ▼
┌──────────────────────────────┐   ST6
│ ERROR INFORMATION MEASUREMENT │
│ STEP                          │
└──────────────────────────────┘
           │
           ▼
┌──────────────────────────────┐   ST7
│ CARRIER GROUP REPRESENTATIVE  │
│ VALUE CALCULATION STEP        │
└──────────────────────────────┘
           │
           ▼
┌──────────────────────────────┐   ST8
│        STORAGE STEP           │
└──────────────────────────────┘
           │
           ▼
          END
```

# FIG. 11

NUMBER OF BITS

CARRIER NUMBER

GROUP 0
GROUP 1
GROUP 2
GROUP 3
GROUP 4
GROUP 5
GROUP 6
GROUP 7

# FIG. 12

|  | GROUP 0 | | | | GROUP 1 | | | | GROUP 2 | | | | | | |
|---|---|---|---|---|---|---|---|---|---|---|---|---|---|---|---|
| GN COUNTER | 0 | | | | 1 | | | | 2 | | | | | | |
| GC COUNTER | 1 | 2 | 3 | 4 | 1 | 2 | 3 | 4 | 1 | 2 | 3 | 4 | 1 | 2 | ... |
| CARRIER NUMBER | 40 | 41 | 42 | 43 | 44 | 45 | 46 | 47 | 48 | 49 | 50 | 51 | | | |
| NUMBER OF BITS PER CARRIER | 4b | 4b | 4b | 4b | 4b | 4b | 4b | 4b | 4b | 4b | 6b | 6b | 6b | 6b | ... |
| NUMBER OF BITS PER RS UNIT | 8b | | 8b | | 8b | | 8b | | 8b | | 8b | | 8b | | 8b | | ... |
| RS COUNTER | R0 | | R1 | | R2 | | R3 | | R4 | | R5 | | R6 | | R7 | | ... |

29

# FIG. 13

| GROUP NUMBER ETC. | BOUNDARY INFORMATION Gnb (n = 0, 1, ···, 7) | FRACTION FLAG Gnp (n = 0, 1, ···, 7) |
|---|---|---|
| GSb | R0 | – |
| 0 | R1 | 0 |
| 1 | R3 | 0 |
| 2 | R6 | 1 |
| 3 | R9 | 1 |
| 4 | R10 | 1 |
| 5 | R11 | 1 |
| 6 | R12 | 1 |
| 7 | R13 | 1 |

# FIG. 14

| ADDR-ESS | GROUP | FRAC-TION FLAG | RECEP-TION LEVEL | ERROR INFORMATION MEASUREMENT VALUE | | |
|---|---|---|---|---|---|---|
| 0 | 0 | 1 | L0 | E0 | ⎱ 1ST SYMBOL | ⎱ 1ST FRAME |
| 1 | 1 | 0 | L1 | E1 | | |
| 2 | 2 | 1 | L2 | E2 | | |
| 3 | 3 | 0 | L3 | E3 | | |
| 4 | 4 | 0 | L4 | E4 | | |
| 5 | 5 | 1 | L5 | E5 | | |
| 6 | 6 | 0 | L6 | E6 | | |
| 7 | 7 | 1 | L7 | E7 | | |
| 8 | 0 | 1 | L0' | E0' | ⎱ 2ND SYMBOL | |
| 9 | 1 | 0 | L1' | E1' | | |
| ⋮ | ⋮ | ⋮ | ⋮ | ⋮ | | |
| 15 | 7 | 1 | L7' | E7' | | |
| ⋮ | ⋮ | ⋮ | ⋮ | ⋮ | | |
| Am0 | 0 | 1 | L0" | E0" | ⎱ m–TH SYMBOL | |
| Am1 | 1 | 0 | L1" | E1" | | |
| ⋮ | ⋮ | ⋮ | ⋮ | ⋮ | | |
| Am7 | 7 | 1 | L7" | E7" | | |
| | | | | | ⎱ 1ST SYMBOL | ⎱ 2ND FRAME |
| ⋮ | ⋮ | ⋮ | ⋮ | ⋮ | | |
| | | | | | ⎱ m–TH SYMBOL | |

## FIG. 15

| GROUP NUMBER ETC. | BOUNDARY INFORMATION Gnb (n = 0, 1, ⋯, 7) | FRACTION FLAG Gnp (n = 0, 1, ⋯, 7) |
|---|---|---|
| GSb | 0 | – |
| 0 | 7 | 1 |
| 1 | 15 | 0 |
| 2 | 22 | 1 |
| 3 | 29 | 0 |
| 4 | 34 | 0 |
| 5 | 40 | 1 |
| 6 | 35 | 0 |
| 7 | 39 | 1 |

## FIG. 16(a)

CNUM = 10

## FIG. 16(b)

CNUM = 4

# FIG. 17

# FIG. 18

START

↓

OFDM DEMODULATION STEP — ST1

↓

ERROR CORRECTION DECODING STEP — ST2

↓

CARRIER RECEPTION STATE CALCULATION STEP — ST3

↓

ERROR INFORMATION DETECTION STEP — ST4

↓

GROUP DETERMINATION STEP — ST5

↓

GROUP NUMBER CONVERSION STEP — ST31

↓

ERROR INFORMATION MEASUREMENT STEP — ST6

↓

CARRIER GROUP REPRESENTATIVE VALUE CALCULATION STEP — ST7

↓

STORAGE STEP — ST8

↓

END

## FIG. 19(a)  ERROR CORRECTION CODE

TIME ←——————————

## FIG. 19(b)  WRITE ADDRESS 0, 1, 3, ⋯ (INTERLEAVED ADDRESSES)

ADDRESS   0  1  2  3  4  ⋯                                                            79

READ ADDRESS 0, 1, 2, 3, 4, 5, ⋯, 79
(ASCENDING ADDRESSES)

DATA ASSIGNED TO CARRIERS SEQUENTIALLY
FROM CARRIER NUMBER 0

## FIG. 19(c)  WRITE ADDRESS  0, 1, 2, 3, 4, 5, ⋯, 79 (ASCENDING ADDRESSES)

ADDRESS   0  1  2  3  4  ⋯                                                            79

READ ADDRESS  0, 1, 3, ⋯ (INTERLEAVED ADDRESSES)

## FIG. 19(d)  BIT SERIES AFTER OFDM DEMODULATION

TIME ←——————————

EP 2 897 315 B1

# FIG. 20

SYMBOL HEADER

RS DATA ENABLE

RS DATA: (VALID DATA), (VALID DATA), (VALID DATA)

INFORMATION DATA COUNT: 0 1 2 3 ---- k-1 k, 0 1 2 3 ---- k-1 k, 0 1 2 3 ---- k-1 k

RS ERROR DETECTION POSITION

RS REDUNDANT DATA ENEBLE

RS COUNTER: 0 1 2 3 ---- T0 ---- , T1 T2 ----

CB COUNTER: C0 C1 C2 C3 ---- CT0 ---- , CT1 CT2 ----

1RS UNIT: CORRESPONDING TO UP TP FOUR CARRIERS

EP 2 897 315 B1

## FIG. 21

EP 2 897 315 B1

# FIG. 22

```
         START

OFDM DEMODULATION STEP                          ST1

ERROR CORRECTION DECODING STEP                  ST2

CARRIER RECEPTION STATE CALCULATION STEP        ST3

ERROR INFORMATION DETECTION STEP                ST4

GROUP DETERMINATION STEP                        ST5

ERROR INFORMATION MEASUREMENT STEP              ST6

CARRIER GROUP REPRESENTATIVE VALUE              ST7
CALCULATION STEP

DATA PROCESSING AND STORAGE STEP                ST48

          END
```

# FIG. 23

STATUS REGISTER

DATA PROCESSING UNIT

EP 2 897 315 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4816547 A

- EP 1492258 A1